(19) Europäisches Patentamt
European Patent Office
Office européen des brevets

(11) **EP 3 717 927 B1**

(12) **FASCICULE DE BREVET EUROPEEN**

(45) Date de publication et mention
de la délivrance du brevet:
**14.02.2024 Bulletin 2024/07**

(21) Numéro de dépôt: **18808019.6**

(22) Date de dépôt: **30.11.2018**

(51) Classification Internationale des Brevets (IPC):
***G01S 5/02*** *(2010.01)*

(52) Classification Coopérative des Brevets (CPC):
**G01S 5/02527; G01S 5/02524**

(86) Numéro de dépôt international:
**PCT/EP2018/083089**

(87) Numéro de publication internationale:
**WO 2019/106128 (06.06.2019 Gazette 2019/23)**

(54) **PROCÉDÉ ET SYSTÈME DE GÉOLOCALISATION D'UN TERMINAL OCCUPANT DES POSITIONS GÉOGRAPHIQUES PARTICULIÈRES**

VERFAHREN UND SYSTEM ZUR GEOLOKALISIERUNG EINES ENDGERÄTES, DAS BESTIMMTE GEOGRAFISCHE POSITIONEN BELEGT

METHOD AND SYSTEM FOR GEOLOCATING A TERMINAL OCCUPYING PARTICULAR GEOGRAPHICAL POSITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2017 FR 1761431**

(43) Date de publication de la demande:
**07.10.2020 Bulletin 2020/41**

(73) Titulaire: **UNABIZ**
**31670 Labège (FR)**

(72) Inventeurs:
• **ISSON, Olivier**
**31650 Lauzerville (FR)**
• **MARTY, Renaud**
**31520 Ramonville Saint Agne (FR)**

(74) Mandataire: **Ipside**
**6, Impasse Michel Labrousse**
**31100 Toulouse (FR)**

(56) Documents cités:
EP-A2- 2 755 431    WO-A1-2012/080787
US-A1- 2011 177 831    US-A1- 2016 165 566

• YU ZHENG ET AL: "Mining interesting locations and travel sequences from GPS trajectories", INTERNATIONAL WORLD WIDE WEB CONFERENCE 18TH, ACM, MADRID, ES, 20 avril 2009 (2009-04-20), pages 791-800, XP058210911, DOI: 10.1145/1526709.1526816 ISBN: 978-1-60558-487-4
• MOHAMED IBRAHIM ET AL: "CellSense: An Accurate Energy-Efficient GSM Positioning System", IEEE TRANSACTIONS ON VEHICULAR TECHNOLOGY, IEEE SERVICE CENTER, PISCATAWAY, NJ, US, vol. 61, no. 1, 1 janvier 2012 (2012-01-01), pages 286-296, XP011397241, ISSN: 0018-9545, DOI: 10.1109/TVT.2011.2173771

## Description

## DOMAINE TECHNIQUE

La présente invention appartient au domaine de la géolocalisation. Notamment, l'invention concerne un procédé et un système de géolocalisation d'un terminal d'un système de communication sans fil. L'invention s'applique particulièrement bien à la géolocalisation d'objets communicants de type « Internet des Objets » (de l'anglais « *Internet Of Things* » ou IoT).

## ÉTAT DE LA TECHNIQUE

Au cours des dernières années, l'utilisation croissante des systèmes de communication sans fil a naturellement conduit à développer des services basés sur la position géographique d'un objet et utilisés par exemple pour l'aide à la navigation, la gestion du trafic, le suivi d'acheminement de marchandises, la télérelève d'informations en général, etc.

Les systèmes de positionnement par satellites comme le GPS (« *Global Positioning System* ») comptent parmi les techniques de géolocalisation les plus connues. Ces systèmes reposent sur l'exploitation par un terminal récepteur de signaux radio émis par des satellites dédiés. La géolocalisation par satellite est particulièrement précise, mais elle souffre de plusieurs inconvénients, notamment le coût et la consommation électrique induits par l'intégration d'un récepteur GPS dans un objet, ainsi que son manque de performance dans des zones fermées.

D'autres techniques existent pour géolocaliser un terminal à partir de signaux échangés avec les stations de base d'un réseau d'accès auquel il est connecté. Dans les réseaux cellulaires, comme par exemple le GSM (« *Global System for Mobile Communications* »), il est connu d'estimer la position d'un terminal comme étant celle de la station de base à laquelle il est actuellement associé. Cette méthode présente cependant une précision de géolocalisation médiocre puisque la zone de couverture d'une station de base peut atteindre plusieurs kilomètres, voire plusieurs dizaines de kilomètres de rayon.

D'autres méthodes consistent à estimer les distances qui séparent un terminal de plusieurs stations de base en calculant des temps d'arrivée, des angles de propagation ou des différences de fréquence pour les signaux échangés entre le terminal et les stations de base. Ces différentes méthodes présentent cependant toutes l'inconvénient de nécessiter du matériel et du logiciel spécifiques. De plus elles requièrent souvent une synchronisation coûteuse des différentes stations de base jouant le rôle de points d'observation. Enfin, elles sont particulièrement sensibles au phénomène dit de multitrajet (propagation d'un même signal radio par plusieurs chemins à cause des phénomènes de réflexion, réfraction et diffraction sur les obstacles rencontrés).

D'autres méthodes de géolocalisation se basent sur le niveau de puissance reçue (RSSI, de l'anglais « *Received Signal Strength Indicator* ») d'un signal échangé entre un terminal et une station de base. Ces méthodes sont particulièrement bien adaptées aux systèmes de communication sans fil de type réseaux cellulaires (comme par exemple le GSM) pour lesquels l'information de RSSI est directement disponible car elle est exploitée par le système de communication lui-même. Ces méthodes reposent sur le fait qu'un signal radio est atténué dans l'atmosphère et donc que le niveau de RSSI d'un signal reçu par un récepteur varie en fonction de la distance qui sépare le récepteur de l'émetteur du signal. Ainsi, il est possible de déterminer la position géographique d'un terminal par trilatération en estimant la distance séparant le terminal des différentes stations de base qui l'entourent à partir des niveaux de RSSI mesurés par les stations de base. L'inconvénient d'une telle méthode de géolocalisation par trilatération basée sur les niveaux de RSSI est son manque de précision dû au fait que les nombreux paramètres qui influent sur l'atténuation du signal (obstacles, interférences radio, mouvement du terminal, etc.) rendent très complexe la fonction qui définit la distance à partir d'un niveau de RSSI.

De nouveaux procédés de géolocalisation basés sur les niveaux de RSSI ont alors été développés. Ces nouveaux procédés reposent sur des techniques d'apprentissage automatique. Concrètement, il s'agit de construire, pendant une phase de calibration, une base de données qui associe à des positions géographiques connues une signature radio correspondant à l'ensemble des niveaux de RSSI mesurés pour un terminal à la position considérée pour un ensemble de stations de base du système. Ensuite, pendant une phase de recherche, une signature radio observée pour un terminal situé à une position inconnue est comparée à l'ensemble des signatures de la base de données afin d'estimer la position du terminal à partir de la (ou des) position(s) correspondant à la (aux) signature(s) la (les) plus ressemblante(s). La demande de brevet EP 2 755 431 A2 décrit un exemple d'un tel procédé de géolocalisation d'un terminal à partir de signatures radio.

De tels procédés présentent cependant plusieurs inconvénients, notamment dans le cas où la zone géographique à couvrir est très vaste, par exemple s'il faut couvrir tout un pays, voire un continent. Un premier inconvénient concerne la précision de géolocalisation. Il arrive en effet que deux signatures radio correspondant à deux positions géographiques voisines soient significativement différentes, ou bien que deux signatures radio particulièrement ressemblantes correspondent à deux positions géographiques éloignées. L'établissement d'une relation entre une signature radio et une position géographique associée est ainsi rendu difficile à cause du bruit généré par de telles situations. Un autre inconvénient concerne la complexité de l'algorithme d'apprentissage automatique utilisé. En effet, pour obtenir une précision suffisante, il est nécessaire d'insérer un grand nombre d'éléments dans la base de données construite pendant la phase de calibration. De plus, si la zone à couvrir est vaste, il y a un grand nombre de stations de base à prendre en compte. Tout ceci concourt à augmenter considérablement les données en entrée de l'algorithme d'apprentissage automatique, et ainsi à créer des contraintes de capacité et de temps de calcul. Pour réaliser la phase de calibration, il est connu d'embarquer dans une flotte de véhicules qui parcourent la zone à couvrir des appareils adaptés pour fournir avec précision la position géographique et les niveaux de RSSI pour les stations de base du système de communication en différents points (le terme anglais pour qualifier cette phase est « *war-driving* »). Plus le nombre de points est important, meilleures seront les performances du procédé de géolocalisation en termes de précision, mais plus la phase de calibration sera longue et coûteuse.

La demande de brevet WO 2012/080787 A1 décrit une méthode pour identifier des points d'intérêt puis déterminer si un terminal se trouve à proximité de l'un de ces points d'intérêt. Dans cette méthode, les points d'intérêt sont déterminés en partitionnant l'espace des signatures radio : un point d'intérêt est associé à un ensemble de signatures radio qui sont similaires les unes avec les autres.

## EXPOSÉ DE L'INVENTION

La présente invention a pour objectif de remédier à tout ou partie des inconvénients de l'art antérieur, notamment ceux exposés ci-avant.

A cet effet, et selon un premier aspect, il est proposé par la présente invention un procédé de géolocalisation d'un terminal, dit « terminal d'intérêt », d'un système de communication sans fil. Le procédé comporte :

- une détermination, à partir de messages émis par d'autres terminaux, dits « terminaux de calibration », et reçus par des stations de base dudit système de communication sans fil, d'un ensemble d'éléments de référence, chaque élément de référence comportant une signature radio associée à une position géographique d'un terminal de calibration lors de l'émission d'un message, ladite signature radio correspondant à un ensemble de valeurs représentatives de la qualité de liens radio existant entre ledit terminal de calibration et des stations de base,
- une détermination, à partir d'un message émis par ledit terminal d'intérêt situé à une position géographique à estimer, d'une signature radio pour ledit terminal d'intérêt,
- une identification de positions géographiques particulières, dites « points d'intérêt », à partir des positions géographiques des éléments de référence de l'ensemble d'éléments de référence,
- une modification de l'ensemble d'éléments de référence à partir des points d'intérêt identifiés,

- une estimation de la position géographique dudit terminal d'intérêt à partir de la signature radio dudit terminal d'intérêt et de l'ensemble d'éléments de référence modifié.

L'estimation de la position géographique d'un terminal d'intérêt est par exemple réalisée par un algorithme d'apprentissage automatique qui a pour but d'établir une relation entre une signature radio et une position géographique.

Un point d'intérêt correspond à un point prioritaire d'émission de messages où, pour les terminaux du système de communication sans fil considéré, il y aura en moyenne plus de messages émis depuis ou à proximité d'un point d'intérêt que depuis une autre position géographique.

Par exemple, un point d'intérêt peut correspondre à une position géographique particulière à laquelle la probabilité de présence d'un terminal du système considéré est plus grande qu'ailleurs. Notamment, dans le cas du transport de palettes de marchandises équipées avec des terminaux et se déplaçant d'entrepôt en entrepôt avec un temps de voyage relativement cours par rapport au temps passé dans un entrepôt, lesdits entrepôts peuvent correspondre à des points d'intérêt.

Selon un autre exemple, un point d'intérêt peut correspondre à un point de convergence de terminaux du système. Notamment, des aéroports peuvent correspondre à des points d'intérêt pour des bagages équipés avec des terminaux du système.

Les points d'intérêt peuvent être identifiés dynamiquement à partir des éléments de référence fournis par les terminaux de calibration. Dans des modes particuliers de mise en oeuvre, au moins une partie des points d'intérêt peuvent également être connus a priori.

La modification de l'ensemble d'éléments de référence correspond par exemple à une phase d'affinement au cours de laquelle des éléments de référence disparates indésirables sont supprimés (par exemple ceux qui sont jugés éloignés des points d'intérêt) et/ou des informations supplémentaires sont ajoutées à des éléments de référence pertinents (par exemple ceux qui sont jugés proches des points d'intérêt), afin de nettoyer et/ou d'enrichir l'ensemble d'éléments de référence. De telles dispositions permettent de gagner en précision de géolocalisation car cette phase d'affinement renforce la relation existant entre une signature radio et une position géographique en tirant profit de l'existence de points d'intérêt auxquels la probabilité de présence d'un terminal est plus grande qu'ailleurs.

En outre, la suppression d'éléments disparates contribue à diminuer le nombre d'éléments de référence utilisés par l'algorithme d'apprentissage, et ainsi à en réduire la complexité, ce qui se traduit par un gain en termes de capacité et de temps de calcul.

Enfin, ces dispositions peuvent permettre de réduire la taille de la signature radio, par exemple en ne considérant que les stations de base qui sont localisées à proximité des points d'intérêt, ce qui contribue encore davantage à réduire la complexité de l'algorithme d'apprentissage.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, la position géographique du terminal d'intérêt est estimée sous la forme d'une valeur représentative d'une probabilité pour ledit terminal d'intérêt d'être situé en un point d'intérêt identifié.

De telles dispositions permettent par exemple de conclure que le terminal d'intérêt est situé au point d'intérêt pour lequel la valeur de probabilité est la plus forte si cette valeur est supérieure à un certain seuil, ou bien de conclure, si cette valeur est inférieure audit seuil, que le terminal d'intérêt n'est situé à proximité d'aucun point d'intérêt (il est par exemple en transit entre deux points d'intérêt).

Dans des modes particuliers de mise en oeuvre, l'identification des points d'intérêt comporte :

- un découpage d'une zone géographique à couvrir en plusieurs cellules de tailles prédéfinies,
- un calcul pour chaque cellule d'une valeur représentative d'un nombre d'éléments de référence situés dans ladite cellule,
- si la valeur calculée satisfait un critère prédéfini, une définition d'un point d'intérêt en fonction de ladite cellule et/ou des positions géographiques des éléments de référence situés dans ladite cellule.

Dans des modes particuliers de mise en oeuvre, l'identification des points d'intérêt comporte une étape de calcul, pour chaque élément de référence, de distances séparant ledit élément de référence et chaque autre élément de référence, ainsi que les étapes suivantes effectuées itérativement sur un ensemble d'éléments de référence temporaire correspondant initialement à l'ensemble d'éléments de référence, jusqu'à ce qu'une condition d'arrêt soit atteinte :

- un calcul pour chaque élément de référence de l'ensemble d'éléments de référence temporaire, d'une valeur représentative d'un nombre d'éléments de référence situés à une distance inférieure à un seuil prédéfini, dits « éléments voisins »,
- si la plus grande valeur calculée, pour un élément dit « élément d'intérêt », est supérieure à un seuil prédéfini :

  o une définition d'un point d'intérêt en fonction des positions géographiques de l'élément d'intérêt et/ou de ses éléments voisins,
  o une suppression de l'élément d'intérêt et de ses éléments voisins de l'ensemble d'éléments de référence temporaire.

Dans des modes particuliers de mise en oeuvre, le procédé de géolocalisation comporte en outre une étape de filtrage des points d'intérêt identifiés en fonction de leurs positions géographiques et/ou d'une valeur représentative d'un nombre d'éléments de référence de l'ensemble d'éléments de référence situés à une distance inférieure à un seuil prédéfini.

Dans des modes particuliers de mise en oeuvre, la valeur représentative d'un nombre d'éléments de référence est calculée en fonction d'un facteur de pondération affecté à chaque élément de référence et représentatif d'une durée écoulée entre le moment d'émission du message par le terminal de calibration et le moment où les points d'intérêt sont identifiés.

De telles dispositions permettent notamment de favoriser des points d'intérêt récents en accordant plus d'importance (c'est-à-dire en affectant une pondération plus forte) aux éléments de référence obtenus à un instant proche de l'instant d'estimation de la positon du terminal d'intérêt.

Dans des modes particuliers de mise en oeuvre, la modification de l'ensemble d'éléments de référence comporte les étapes suivantes pour chaque élément de référence de l'ensemble d'éléments de référence :

- un calcul de la plus petite distance séparant ledit élément de référence et un des points d'intérêt identifiés,
- si la plus petite distance calculée est inférieure à un seuil prédéfini :

  o une association audit élément de référence du point d'intérêt correspondant,

- sinon :

  o une suppression dudit élément de référence de l'ensemble d'éléments de référence.

Dans des modes particuliers de mise en oeuvre, la modification de l'ensemble d'éléments de référence comporte les étapes suivantes pour chaque élément de référence de l'ensemble d'éléments de référence :

- un calcul, pour chaque point d'intérêt identifié, d'une valeur représentative de la distance qui sépare ledit élément de référence dudit point d'intérêt,
- une association audit élément de référence des valeurs ainsi calculées.

Dans des modes particuliers de mise en oeuvre, un lien radio est un lien montant vers une station de base du système de communication sans fil.

Dans des modes particuliers de mise en oeuvre, une détermination de la signature radio d'un terminal comporte :

- une émission par le terminal d'un message à destination des stations de base,

- une mesure, pour chaque station de base, d'une valeur représentative de la qualité du lien radio existant entre ledit terminal et la station de base considérée à partir du message reçu dudit terminal,
- une formation, par un serveur relié aux stations de base, de la signature radio du terminal à partir des valeurs mesurées.

Dans des modes particuliers de mise en oeuvre, un terminal de calibration est équipé d'un système de positionnement et la détermination de la signature radio dudit terminal de calibration comporte en outre :

- une inclusion, dans le message émis par ledit terminal de calibration, de la position géographique courante dudit terminal de calibration mesurée par le système de positionnement,
- une extraction, par le serveur, de la position géographique contenue dans ledit message.

De telles dispositions permettent notamment de pouvoir facilement enrichir l'ensemble d'éléments de référence avec de nouveaux éléments de référence provenant des terminaux de calibration, ce qui permet de découvrir de nouveaux points d'intérêt pouvant apparaître au fil du temps et/ou d'oublier des points d'intérêt devenus désuets.

La phase de calibration consistant à définir ou enrichir l'ensemble d'éléments de référence peut être effectuée une seule fois au début, ou bien elle peut être répétée de manière récurrente (par exemple périodiquement ou bien de manière contrôlée par envoi de messages de contrôle aux terminaux de calibration), ou bien elle peut être effectuée de façon continue (par exemple si les terminaux de calibration émettent régulièrement des messages incluant leur position géographique courante).

Grâce à l'existence de certains terminaux spécifiques équipés d'un système de positionnement, il est possible d'automatiser entièrement la phase de calibration qui consiste à définir l'ensemble d'éléments de référence. En outre, la mise en oeuvre du procédé de géolocalisation au sein du système de communication sans fil est particulièrement aisée et peu onéreuse car elle ne nécessite pas de matériel spécifique additionnel au niveau des stations de base ou au niveau de la majorité des terminaux (seuls les terminaux jouant le rôle de terminaux de calibration peuvent nécessiter des modifications matérielles et/ou logicielles).

Dans des modes particuliers de mise en oeuvre, la valeur représentative de la qualité du lien radio existant entre un terminal et une station de base est un niveau de puissance reçue d'un signal radio échangé entre ladite station de base et ledit terminal.

Dans des modes particuliers de mise en oeuvre, le lien radio est un canal de communication à bande ultra étroite.

Un système de communication sans fil à bande ultra étroite ("Ultra Narrow Band" ou UNB dans la littérature anglo-saxonne) est particulièrement adapté pour des applications du type IoT. Il permet en effet des communications bas-débit avec une longue portée et des consommations énergétiques basses (système de type LPWAN, pour "Low Power Wide Area Network" en anglais).

Dans des modes particuliers de mise en oeuvre, l'estimation de la position géographique d'un terminal d'intérêt à partir de la signature radio dudit terminal d'intérêt et de l'ensemble d'éléments de référence modifié est réalisée à l'aide d'un algorithme d'apprentissage automatique de classification basé sur une technique d'arbres décisionnels.

Selon un deuxième aspect, la présente invention concerne un système de communication sans fil comportant des terminaux et un réseau d'accès comportant des stations de base et un serveur relié auxdites stations de base. Ledit système comporte une base de données mémorisant un ensemble d'éléments de référence formés à partir de messages émis par des terminaux, dits « terminaux de calibration », et reçus par au moins une station de base. Chaque élément de référence comporte une signature radio associée à une position géographique d'un terminal de calibration lors de l'émission d'un message. Ladite signature radio comprend des valeurs représentatives de la qualité de liens radio existant entre ledit terminal de calibration et des stations de base. En outre, le réseau d'accès est configuré pour :

- mesurer des valeurs représentatives de la qualité de liens radio existant entre des stations de base et un terminal dont la position géographique doit être estimée, dit « terminal d'intérêt »,
- former une signature radio correspondant à l'ensemble des valeurs mesurées pour ledit terminal d'intérêt,
- identifier des positions géographiques particulières, dites « points d'intérêt », à partir des positions géographiques des éléments de référence de l'ensemble d'éléments de référence,
- modifier l'ensemble d'éléments de référence à partir des points d'intérêt identifiés,
- estimer la position géographique du terminal d'intérêt à partir de la signature radio du terminal d'intérêt et de l'ensemble d'éléments de référence modifié.

## PRÉSENTATION DES FIGURES

L'invention sera mieux comprise à la lecture de la description suivante, donnée à titre d'exemple nullement limitatif, et faite en se référant aux figures 1 à 14 qui représentent :

- Figure 1 : une représentation schématique d'un système de communication sans fil comportant un dispositif de calibration,

- Figure 2 : un diagramme illustrant les étapes principales d'un procédé conventionnel de géolocalisation d'un terminal d'un système de communication sans fil,

- Figure 3 : un diagramme illustrant les étapes principales d'un procédé de géolocalisation selon l'invention,

- Figure 4 : une représentation schématique d'un mode préféré de réalisation où le dispositif de calibration est un terminal équipé d'un système de positionnement,

- Figure 5 : un diagramme illustrant les étapes principales d'un mode préféré de mise en oeuvre de la phase de calibration du procédé de géolocalisation,

- Figure 6 : un diagramme illustrant les étapes principales d'un mode préféré de mise en oeuvre de la phase de recherche du procédé de géolocalisation,

- Figure 7 : un diagramme illustrant les étapes principales d'un premier mode particulier de mise en oeuvre d'une étape d'identification de points d'intérêt,

- Figure 8 : une illustration du premier mode particulier de mise en oeuvre de l'étape d'identification de points d'intérêt,

- Figure 9 : un diagramme illustrant les étapes principales d'un deuxième mode particulier de mise en oeuvre de l'étape d'identification de points d'intérêt,

- Figure 10 : une illustration du deuxième mode particulier de mise en oeuvre de l'étape d'identification de points d'intérêt,

- Figure 11 : un diagramme illustrant les étapes principales d'un premier mode particulier de mise en oeuvre d'une étape de modification d'un ensemble de référence,

- Figure 12 : un diagramme illustrant les étapes principales d'un deuxième mode particulier de mise en oeuvre de l'étape de modification de l'ensemble de référence,

- Figure 13 : des courbes de répartition d'une distance d'erreur pour un procédé conventionnel de géolocalisation,

- Figure 14: des courbes de répartition d'une distance d'erreur pour le procédé de géolocalisation selon l'invention.

Dans ces figures, des références identiques d'une figure à une autre désignent des éléments identiques ou analogues. Pour des raisons de clarté, les éléments représentés ne sont pas nécessairement à l'échelle, sauf mention contraire.

## DESCRIPTION DÉTAILLÉE DE MODES DE RÉALISATION

Tel qu'indiqué précédemment, la présente invention vise à estimer la position géographique d'un terminal, dit « terminal d'intérêt », d'un système de communication sans fil à l'aide d'une méthode d'apprentissage basée sur des informations représentatives de la qualité de liens radio existant entre ledit terminal et des stations de base dudit système de communication sans fil.

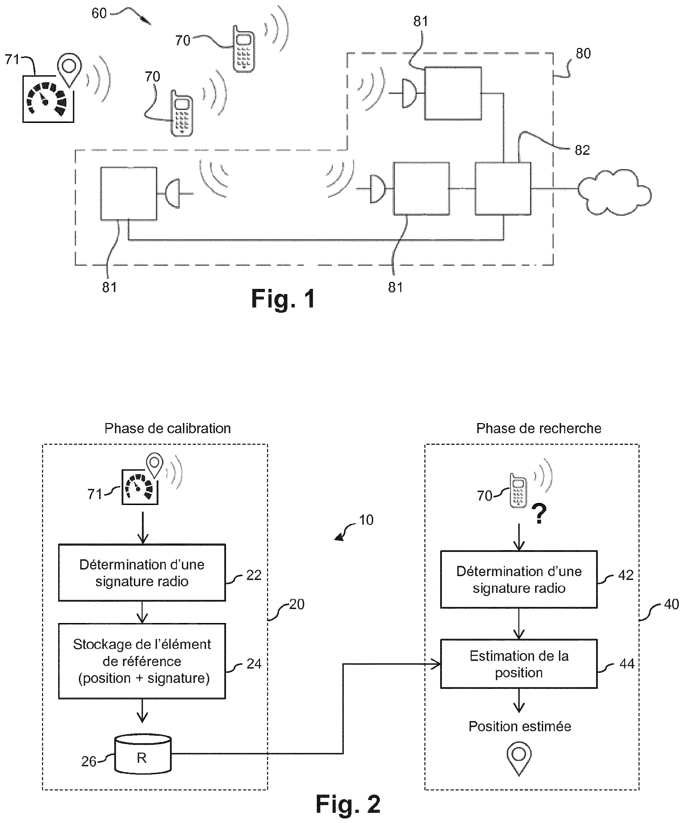

La figure 1 représente schématiquement un système 60 de communication sans fil, comportant plusieurs terminaux 70 et un réseau d'accès 80 comportant plusieurs stations de base 81 reliées et un serveur 82 reliées auxdites stations de base 81. Dans un tel système 60, les communications peuvent généralement être bidirectionnelles, c'est-à-dire que des données peuvent être transmises du réseau d'accès 80 vers un terminal 70 sur un lien radio descendant, ou bien d'un terminal 70 vers le réseau d'accès 80 sur un lien radio montant. Aussi, une mesure de la qualité du lien radio existant entre un terminal 70 et une station de base 81 du réseau d'accès 80 peut par exemple être effectuée par l'une ou l'autre de ces entités.

Aussi, il est possible d'introduire dans le système 60 de communication sans fil un ou plusieurs dispositifs 71 de calibration adaptés pour déterminer avec précision la position géographique courante, par exemple avec un système de positionnement tel qu'un récepteur GPS. Ce dispositif 71 de calibration possède en outre des moyens configurés pour permettre la mesure d'une valeur représentative de la qualité du lien radio existant entre lui et les stations de base 81 du réseau d'accès 80. Comme indiqué précédemment, cette mesure peut par exemple être faite par le dispositif 71 de calibration lui-même, sur le lien descendant, ou bien par une station de base 81 du réseau d'accès 81, sur le lien montant. Si la mesure est effectuée par le dispositif 71 de calibration sur le lien descendant, cette mesure peut par exemple être faite sur des signaux radio destinés à d'autres terminaux 70 du système que le dispositif 71 de calibration.

Les valeurs représentatives de la qualité de lien radio existant entre un terminal 70 ou un dispositif 71 de calibration et une station de base 81 peuvent être transmises au serveur 82 afin qu'il mette en oeuvre certaines étapes d'un procédé de géolocalisation.

La figure 2 représente les deux principales phases d'un procédé 10 de géolocalisation d'un terminal 70 d'intérêt d'un système 60 de communication sans fil basé sur une méthode d'apprentissage.

Une première phase 20 de calibration comporte :

- une étape de détermination 22 de signatures radio associées respectivement à des positions géographiques connues, chaque signature radio correspondant à un ensemble de valeurs représentatives de la qualité de liens radio existant entre un dispositif 71 de calibration dont la position géographique est connue et une pluralité de stations de base 81 du réseau d'accès 80 du système 60 de communication sans fil, et

- une étape de stockage 24 dans un ensemble 26 d'éléments de référence de chaque signature radio déterminée et de la position géographique associée du dispositif 71 de calibration.

Par « position géographique », on entend dans la suite de la description un ensemble de deux coordonnées correspondant respectivement à la latitude et la longitude. Il convient de noter que des variantes pourraient être envisagées pour définir une position géographique. Par exemple, une troisième coordonnée correspondant à l'altitude par rapport au niveau moyen de la mer pourrait également être prise en compte.

En résumé, il s'agit pendant cette phase 20 de calibration de faire une sorte de cartographie radio de la zone géographique considérée.

Ensuite, une phase 40 de recherche comporte :

- une étape de détermination 42 d'une signature radio pour ledit terminal 70 d'intérêt situé à une position géographique à estimer,
- une étape d'estimation 44 de la position géographique dudit terminal 70 d'intérêt à partir de la signature radio déterminée et de l'ensemble 26 d'éléments de référence acquis pendant la phase 20 de calibration.

Le procédé 10 de géolocalisation selon l'invention introduit une phase 30 supplémentaire, dite « phase 30 d'affinement », qui a pour but de nettoyer l'ensemble 26 d'éléments de référence (c'est-à-dire supprimer des éléments de référence indésirables) et/ou de l'enrichir (c'est-à-dire d'ajouter des informations aux éléments de référence conservés) afin d'améliorer l'estimation 44 de la position géographique d'un terminal 70 de référence.

Cette phase 30 d'affinement se base sur l'idée que les terminaux 70 peuvent avoir tendance à passer par des positions géographiques particulières de convergence des terminaux 70 du système 60 (on entend par là des positions géographiques auxquelles un grand nombre de terminaux 70 ont tendance à passer). A de telles positions géographiques particulières, le nombre de messages émis par les terminaux 70 est alors en moyenne plus élevé qu'ailleurs. Dans certains cas, les terminaux 70 peuvent également occuper préférentiellement un ensemble fini de positions géographiques particulières (autrement dit, à un instant donné, un terminal 70 peut statistiquement avoir une probabilité plus forte d'être localisé à l'une de ces positions géographiques particulières plutôt qu'ailleurs). Dans la description, on appelle « point d'intérêt » une telle position géographique particulière.

Une telle situation est observée par exemple dans le cas du transport de marchandises se déplaçant d'entrepôt en entrepôt avec un temps de voyage relativement cours par rapport au temps passé dans un entrepôt. Il est par exemple possible d'équiper des palettes utilisés pour le transport de marchandises avec des terminaux 70 du système 60 de communication sans fil afin de pouvoir les géolocaliser. Les différents entrepôts dans lesquels sont successivement stockées les palettes correspondent alors à des points d'intérêt pour le procédé 10 de géolocalisation. Un camion transportant lesdites palettes peut par exemple embarquer un dispositif 71 de calibration permettant de construire l'ensemble 26 d'éléments de référence.

Pour estimer la position géographique d'un terminal 70 d'intérêt, plutôt que d'estimer la position du terminal 70 sur l'ensemble de la zone géographique à couvrir, le procédé 10 de géolocalisation selon l'invention estime la position du terminal 70 d'intérêt en fonction des points d'intérêt identifiés. Autrement dit, plutôt que d'utiliser une méthode de régression conventionnelle qui nécessiterait un nombre d'éléments de référence très élevé (et donc des capacités et des temps de calcul très importants) pour obtenir une précision raisonnable, le procédé 10 de géolocalisation selon l'invention utilise un algorithme d'apprentissage automatique de classification qui consiste par exemple à attribuer au terminal 70 d'intérêt une probabilité d'être situé à chacun des points d'intérêt identifiés. La position géographique estimée du terminal 70 d'intérêt peut alors par exemple être définie comme la position géographique du point d'intérêt auquel il a la plus grande probabilité d'être situé. En fonction de la valeur de la probabilité remontée (par exemple si elle est inférieure à un seuil prédéfini), il est également possible de déterminer si le terminal 70 n'est pas situé à un point d'intérêt (par exemple s'il s'agit d'un terminal 70 embarqué sur une palette qui est en transit entre deux entrepôts).

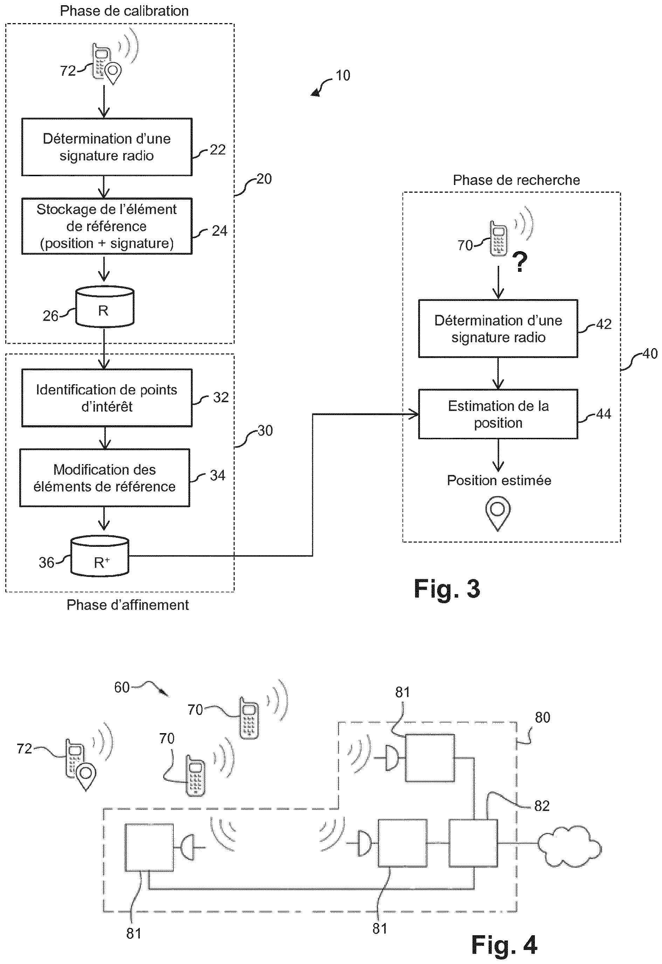

La figure 3 représente schématiquement les principales phases d'un procédé 10 de géolocalisation selon l'invention. Outre la phase 20 de calibration et la phase 40 de recherche déjà décrites en référence à la figure 2, le procédé 10 de géolocalisation comporte une phase 30 d'affinement.

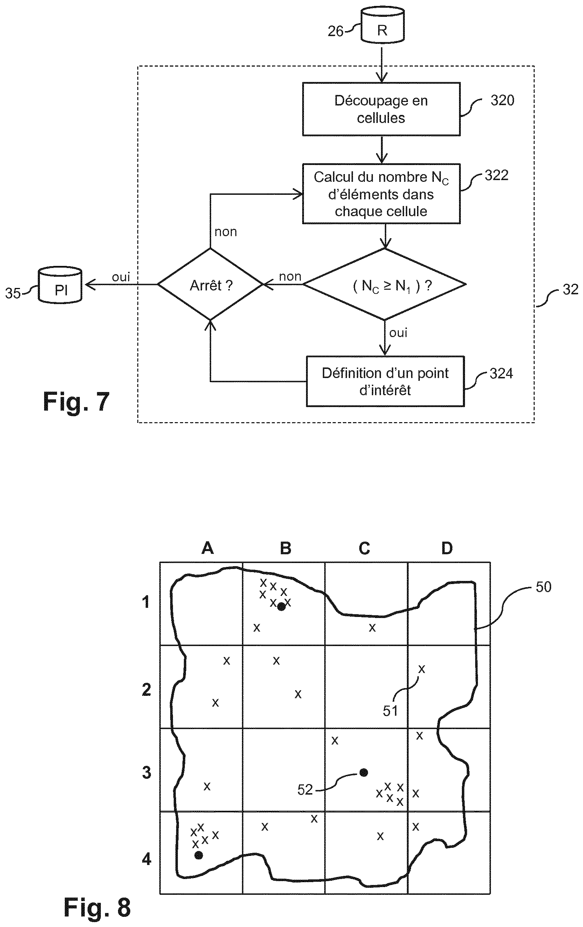

Cette phase 30 d'affinement comporte une première étape d'identification 32 de points d'intérêt qui permet de définir, à partir de l'ensemble 26 d'éléments de référence acquis pendant la phase 20 de calibration, un ensemble 35 de points d'intérêt. Cette étape sera détaillée ultérieurement en référence aux figures 7 à 10.

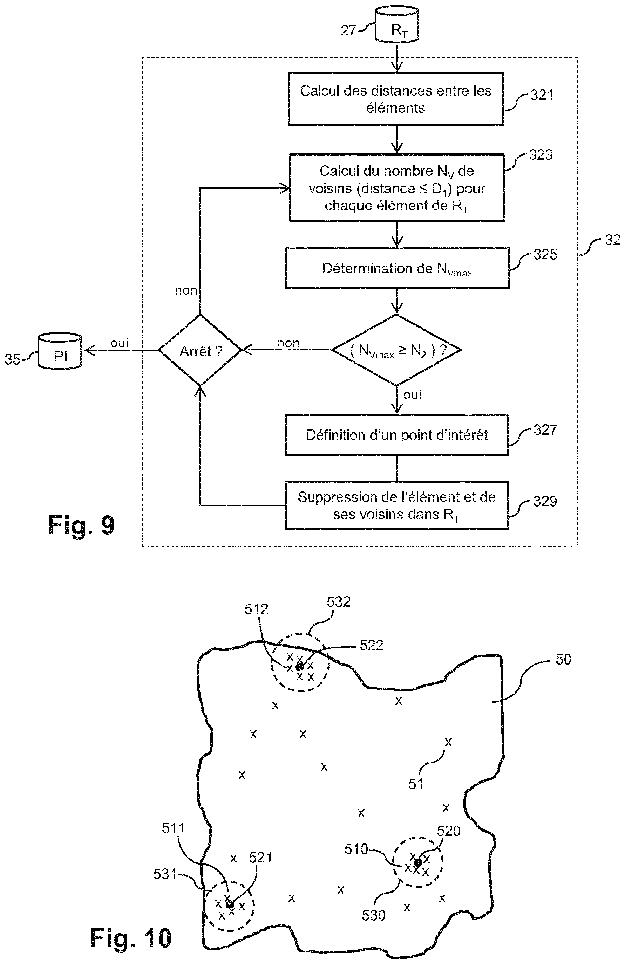

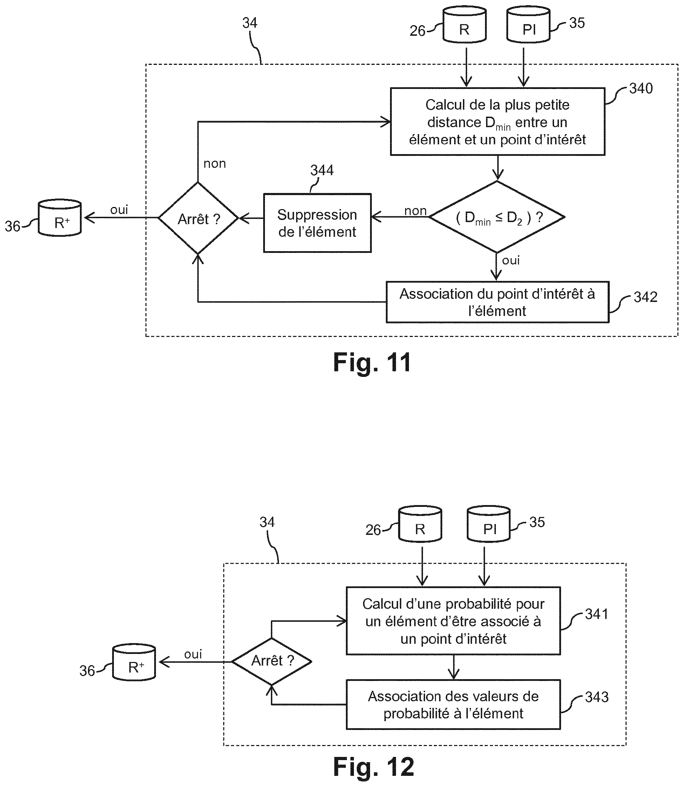

Ensuite, à l'aide de l'ensemble 35 de points d'intérêt identifiés, une étape de modification 34 de l'ensemble 26 d'éléments de référence fournit un ensemble 36 d'éléments de référence modifié qui est alors utilisé pendant la phase 40 de recherche pour déterminer la position géographique d'un terminal 70 d'intérêt. Cette étape de modification 34 sera détaillée ultérieurement en référence aux figures 10 et 11.

Il est en effet avantageux d'identifier des points d'intérêt et d'accorder plus d'importance aux éléments de référence dont la position géographique est proche de celle d'un point d'intérêt. Il est par exemple possible de supprimer les éléments de référence dont la position géographique est éloignée d'un point d'intérêt d'une distance supérieure à un seuil prédéfini. En outre, il est avantageux d'associer à chaque élément de référence le point d'intérêt le plus proche, ou bien une valeur représentative de la distance qui sépare la position géographique dudit élément de référence de chaque point d'intérêt. De telles dispositions permettent en effet de réduire un « bruit » généré par les éléments qui ne sont pas regroupés à proximité des points d'intérêt dans la relation que l'algorithme d'apprentissage automatique cherche à établir entre une signature radio et un point d'intérêt.

On entend ici par « distance » une distance calculée de manière conventionnelle entre deux positions géographiques exprimées à l'aide de la longitude et de la latitude. Aussi, on entend par « distance entre deux éléments de référence », la distance entre les positions géographiques desdits deux éléments de référence. Il en sera de même tout au long de la description, sauf mention contraire.

Dans la suite de la description, on se place à titre d'exemple et de manière non limitative dans le cas d'un système 60 de communication sans fil à bande ultra étroite. Par « bande ultra étroite » (« *Ultra Narrow Band* » ou UNB dans la littérature anglo-saxonne), on entend que le spectre fréquentiel instantané des signaux radioélectriques émis par les terminaux est de largeur fréquentielle inférieure à deux kilohertz, voire inférieure à un kilohertz. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz). De tels systèmes de communication sans fil UNB sont particulièrement adaptés pour des applications du type IoT ou du type M2M (acronyme anglo-saxon pour « *Machine to Machine* »).

Dans un tel système 60 de communication sans fil, les échanges de données sont essentiellement monodirectionnels, en l'occurrence sur un lien montant des terminaux 70 vers le réseau d'accès 80 dudit système 60 de communication sans fil. Afin de minimiser les risques de perdre un message émis par un terminal 70, la planification du réseau d'accès 80 est souvent réalisée de telle sorte qu'une zone géographique donnée est couverte simultanément par plusieurs stations de base 81, de telle manière qu'un message émis par un terminal 70 peut être reçu par plusieurs stations de base 81.

Chaque station de base 81 est adaptée à recevoir des messages des terminaux 70 qui se trouvent à sa portée. Chaque message ainsi reçu est par exemple transmis au serveur 82 du réseau d'accès 80, éventuellement accompagné d'autres informations comme un identifiant de la station de base 81 qui l'a reçu, une valeur représentative de la qualité du signal radio transportant le message, la fréquence centrale sur laquelle le message a été reçu, une date à laquelle le message a été reçu, etc. Le serveur 82 traite par exemple l'ensemble des messages reçus des différentes stations de base 81. Le serveur 82 peut notamment être utilisé pour la mise en oeuvre du procédé 10 de géolocalisation d'un terminal 70 du système 60.

La figure 4 représente schématiquement un mode préféré de réalisation d'un tel système 60 dans lequel certains terminaux 72 du système 60 de communication sans fil, dit « terminaux 72 de calibration », possèdent un système de positionnement (par exemple un récepteur GPS) qui permet d'obtenir avec précision la position géographique du terminal 72 (par exemple quand celui-ci est situé à un endroit où il peut capter les signaux des satellites dudit système de positionnement). Ces terminaux 72 de calibration jouent le rôle des dispositifs 71 de calibration mentionnés précédemment en plus de leurs fonctions courantes dans le système 60 de communication sans fil.

Il convient de noter que d'autres méthodes peuvent être envisagées pour obtenir la position géographique d'un terminal 72 de calibration. Par exemple, la position géographique d'un terminal 72 de calibration peut être déterminée à partir de l'adresse MAC (acronyme anglais de « *Medium Access Control* ») d'un point d'accès Wi-Fi auquel ledit terminal 72 de calibration est connecté si la position géographique dudit point d'accès est connue. Le choix d'une méthode particulière pour déterminer la position géographique d'un terminal 72 de calibration ne constitue qu'une variante de mise en oeuvre de l'invention.

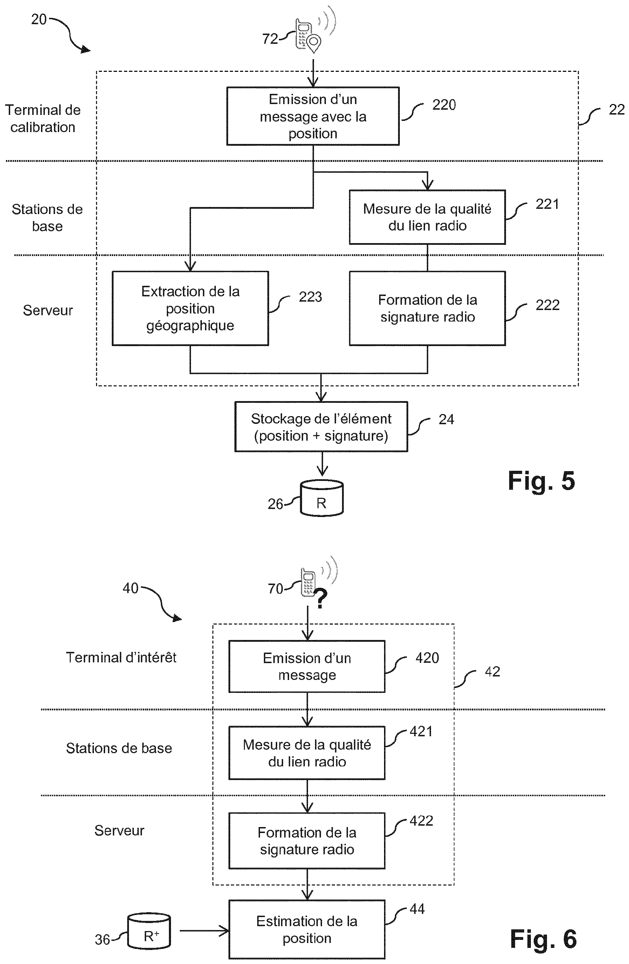

La figure 5 représente les principales étapes d'un mode préféré de mise en oeuvre de la phase 20 de calibration du procédé 10 de géolocalisation.

Pour cette phase 20 de calibration, plutôt que de parcourir intentionnellement la zone géographique à couvrir avec un appareil spécifique adapté pour déterminer une position géographique et mesurer des valeurs représentatives de qualité de lien radio à cette position, il est avantageux d'utiliser la capacité éventuelle de certains terminaux du système de remplir ce rôle, c'est le cas des terminaux 72 de calibration.

Ainsi, une première étape de la phase 20 de calibration consiste en l'émission 220 par un terminal 72 de calibration d'un message contenant la position géographique courante à destination du réseau d'accès 80 du système 60 de communication sans fil. Il est à noter que ce message peut être émis de manière indépendante au procédé 10 de géolocalisation. Par exemple, il peut s'agir d'un message de télérelève d'information conventionnel incluant la position géographique courante et n'ayant pas pour objectif premier de participer à la phase 20 de calibration du procédé 10 de géolocalisation.

Les stations de base 81 du réseau d'accès 80 qui ont reçu le signal contenant ledit message font alors une mesure 221 de la qualité du lien radio sur lequel le message a été transmis. Dans un mode préféré de mise en oeuvre, et pour la suite de la description à titre d'exemple non limitatif, la valeur représentative de la qualité du lien radio utilisée est le niveau moyen de puissance reçue (RSSI), par exemple exprimé en décibel, par la station de base 81 pour le signal transportant ledit message.

Il est à noter que d'autres valeurs représentatives de la qualité du lien radio pourraient être utilisées, comme par exemple l'atténuation du signal, un rapport signal sur bruit du signal (SNR ou « *Signal on Noise Ratio* » dans la littérature anglo-saxonne) ou bien un indicateur de qualité du canal de communication (CQI ou « *Channel Quality Indicator* » en anglais).

Dans une étape 222 de formation de la signature radio, le serveur 82 collecte alors les niveaux de RSSI mesurés par les différentes stations de base 81 et les inclut dans la signature radio ainsi déterminée pour le terminal 72 de calibration. Pour les stations de base 81 qui n'ont pas reçu le message, par exemple parce que le terminal 72 est trop éloigné et ne se trouve pas sous leur couverture radio, une valeur par défaut de -160 dB est par exemple utilisée.

Il convient de noter que plusieurs variantes sont possibles pour le choix des stations de base à prendre en compte pour la formation d'une signature radio. Selon un premier exemple, de manière conventionnelle, toutes les stations de base du système 60 de communication sans fil sont considérées. Selon un autre exemple, il est possible de limiter le nombre de stations de base à prendre en compte, par exemple en fonction d'une zone géographique limitée à laquelle on s'intéresse.

Le serveur 82 procède aussi à l'extraction 224 de l'information sur la position géographique contenue dans le message émis par le terminal 72 de calibration (pour rappel, ce message a été préalablement transmis au serveur 82 par les stations de base 81 qui l'ont reçu).

Finalement, le couple d'information formé par la position géographique du terminal 72 de calibration et la signature radio associée est ajouté à l'ensemble 26 des éléments de référence acquis pendant la phase 20 de calibration. Par exemple, cette étape consiste au stockage 24 du couple d'information formé par la position géographique et la signature radio associée dans une base de données mémorisée au sein du serveur 82.

Dans des modes particuliers de mise en oeuvre, les étapes de la phase 20 de calibration décrites ci-avant sont répétées pendant une durée prédéfinie, par exemple pendant plusieurs jours, voire plusieurs semaines ou plusieurs mois, pour des terminaux 72 de calibration du système 60 de communication sans fil, ceci afin d'obtenir un ensemble 26 d'éléments de référence contenant un nombre conséquent d'informations, c'est-à-dire une cartographie précise de la zone à couvrir. Dans une variante, les étapes de la phase 20 de calibration sont répétées jusqu'à obtenir un nombre prédéfini d'éléments de référence dans l'ensemble 26.

Dans un mode préféré de mise en oeuvre, l'ensemble 26 d'éléments de référence est continuellement enrichi par de nouveaux éléments de référence provenant des terminaux 72 de calibration. De telles dispositions permettent notamment de découvrir de nouveaux points d'intérêt pouvant apparaître au fil du temps et/ou d'oublier des points d'intérêt devenus désuets.

Il convient de noter que, tout comme les terminaux 70 d'intérêt, les terminaux 72 de calibration sont mobiles et ils peuvent par conséquent fournir des données de référence correspondant à différentes positions géographiques.

Dans des modes particuliers de mise en oeuvre, l'ensemble 26 d'éléments de référence est également continuellement enrichi par des éléments correspondant chacun à une position géographique estimée d'un terminal 70 d'intérêt associée à la signature radio dudit terminal 70 d'intérêt.

Il convient également de noter que selon d'autres modes de mise en oeuvre, l'information sur la position géographique courante du terminal 72 de calibration pourrait être émise par un autre système de communication que celui pour lequel sont faites les mesures de RSSI permettant de définir la signature radio dudit terminal 72 de calibration. Par exemple, la position géographique courante du terminal 72 de calibration pourrait être émise au serveur 82 via un réseau de téléphonie mobile du type GSM, UMTS ou LTE, alors que le message pour lequel sont effectuées les mesures de RSSI est émis vers le réseau d'accès 80 du système 60 de communication sans fil UNB. Afin de faciliter, au niveau du serveur 82, l'association de la signature radio déterminée pour le terminal 72 de calibration avec sa position géographique courante, il est envisageable, par exemple, d'horodater le message transportant l'information sur la position géographique courante et le message émis vers le système de communication sans fil UNB.

La figure 6 représente les principales étapes d'un mode préféré de mise en oeuvre de la phase 40 de recherche pour le procédé 10 de géolocalisation.

Cette phase 40 de recherche est initiée par l'émission 420 d'un message par un terminal 70 d'intérêt à destination du réseau d'accès 80 du système 60 de communication sans fil. Ce message peut être un message quelconque émis de manière indépendante au procédé 10 de géolocalisation du terminal. Par exemple, ce message peut être émis à des fins de télérelève d'informations qui n'ont rien à voir avec la géolocalisation du terminal 70. Alternativement, ce message peut être émis intentionnellement dans le but de géolocaliser le terminal 70. Dans tous les cas, le contenu du message n'a pas nécessairement d'importance dans la phase 40 de recherche.

Similairement à ce qui est fait pour la phase 20 de calibration, les stations de base 81 du réseau d'accès 80 qui ont reçu ledit message procèdent à une mesure 421 du niveau de RSSI du signal transportant le message.

Dans une étape 422 de formation de la signature radio, le serveur 82 collecte alors les niveaux de RSSI mesurés par les différentes stations de base 81 et les inclut dans la signature radio ainsi déterminée pour le terminal 70 d'intérêt.

L'estimation 44 de la position géographique du terminal 70 d'intérêt ayant émis le message est alors effectuée à partir d'une part de l'ensemble 36 d'éléments de référence modifié par la phase 30 d'affinage, et d'autre part de la signature radio déterminée pour le terminal 70 d'intérêt dont la position géographique doit être estimée.

La figure 7 représente schématiquement les principales étapes d'un premier mode particulier de mise en oeuvre de l'étape d'identification 32 des points d'intérêt. Cette étape d'identification 32 des points d'intérêt est mise en oeuvre par le serveur 82 pendant la phase 30 d'affinement à partir de l'ensemble 26 des éléments de référence acquis pendant la phase 20 de calibration.

Une première étape correspond à un découpage 320 de la zone géographique à couvrir en plusieurs cellules dont les dimensions sont prédéfinies. Ce découpage peut correspondre par exemple à un quadrillage régulier de la zone géographique à couvrir, les cellules correspondant alors à des carrés identiques. Selon un autre exemple, les cellules peuvent avoir une forme circulaire avec un diamètre fixe prédéfini et un recouvrement partiel de chaque cellule avec au moins une autre cellule afin de couvrir la totalité de la zone géographique. Selon encore un autre exemple, les cellules peuvent avoir des formes et/ou des dimensions différentes définies par exemple en fonction de certaines informations connues a priori sur la répartition des terminaux 70 sur la zone géographique à couvrir.

Le serveur 82 procède ensuite à une étape de calcul 322, pour chaque cellule, d'un nombre Ne d'éléments de référence dont la position géographique est située à l'intérieur de ladite cellule.

Si, pour une cellule donnée, le nombre Ne ainsi calculé est supérieur ou égal à un seuil prédéfini $N_1$, alors un point d'intérêt est identifié pour ladite cellule. Le point d'intérêt peut par exemple être défini comme étant le centre de la cellule. Dans une variante, le point d'intérêt peut être défini comme une moyenne des positions géographiques des éléments de référence situés dans la cellule.

Lorsque toutes les cellules ont été prises en compte, l'étape d'identification 32 des points d'intérêt prend fin. Un ensemble 35 des points d'intérêt identifiés est alors disponible et mémorisé au sein du serveur 82.

La figure 8 est une illustration du premier mode particulier de mise en oeuvre de l'étape d'identification 32 de points d'intérêt décrit en référence à la figure 7. Une zone 50 géographique est quadrillée par 16 cellules identiques en forme de carré. Chaque cellule est identifiée par un couple « L-C », L étant une lettre de A à D, et C étant un chiffre de 1 à 4. Des éléments 51 de référence acquis pendant la phase 20 de calibration sont représentés sous forme de croix. Chaque croix représente la position géographique associée à un élément 51 de référence acquis dans la zone 50 géographique considérée. Dans l'exemple considéré :

- $N_C = 0$ pour les cellules A-1, D-1, C-2 et B-3, on a $N_C = 1$ pour les cellules C-1, D-2, A-3, C-4 et D-4,
- $N_C = 2$ pour les cellules A-2, B-2, D-3 et B-4, on a $N_C = 5$ pour la cellule A-4,
- $N_C = 6$ pour la cellule C-3, et
- $N_C = 7$ pour la cellule B-1.

Dans l'exemple considéré, le seuil $N_1$ est fixé à 5, et un point d'intérêt 52 est défini comme étant le centre d'une cellule pour laquelle $N_c \geq N_1$. Chaque point d'intérêt 52 ainsi défini est représenté sur la figure 7 par un point noir. Dans l'exemple considéré, trois points d'intérêt 52 ont été identifié. Ils correspondent respectivement au centre des cellules B-1, C-3 et A-4.

Ce premier mode particulier de mise en oeuvre de l'étape d'identification 32 des points d'intérêt est plus ou moins précis selon les dimensions des cellules. Il apparaît par exemple à la figure 8 que le centre de la cellule C-3 est relativement éloigné d'une position plus probable d'un point d'intérêt qui serait situé en bas à droite de la cellule, là où se trouvent la majorité des éléments 51 de référence situés dans ladite cellule.

La figure 9 représente schématiquement les principales étapes d'un deuxième mode particulier de mise en oeuvre de l'étape d'identification 32 des points d'intérêt.

Pour ce deuxième mode particulier de mise en oeuvre de l'étape d'identification 32 des points d'intérêt, des opérations sont effectuées sur un ensemble 27 d'éléments de référence temporaire qui correspond initialement à l'ensemble 26 d'éléments de référence acquis pendant la phase 20 de calibration. Ainsi, l'ensemble 26 d'éléments de référence acquis pendant la phase 20 de calibration n'est pas modifié par ce deuxième mode de mise en oeuvre de l'étape d'identification 32 des points d'intérêt.

Dans une première étape, le serveur 82 procède à un calcul 321 des distances séparant deux éléments de référence de l'ensemble 27.

Dans une deuxième étape, pour chaque élément de référence de l'ensemble 27 d'éléments de référence temporaire, le serveur 82 procède à un calcul 323 du nombre Nv d'éléments de référence, dit « éléments voisins », dont la distance à l'élément de référence considéré est inférieure ou égale à un seuil prédéfini $D_1$.

Vient ensuite une étape de détermination 325 du nombre Nvmax correspondant à la plus grande valeur parmi les nombres Nv précédemment calculés.

Si $N_{Vmax}$ est supérieur ou égal à une valeur seuil prédéfinie $N_2$, le serveur 82 procède alors à une étape de définition 327 d'un point d'intérêt à partir de l'élément de référence pour lequel le nombre de voisins est égal à Nvmax, dit « élément d'intérêt », puis à une étape de suppression 329 dudit élément d'intérêt et de ses éléments voisins dans l'ensemble 27 temporaire. Le point d'intérêt est par exemple défini comme étant la moyenne des positions géographiques de l'élément d'intérêt et de ses éléments voisins. Selon un autre exemple, le point d'intérêt peut être défini simplement comme étant la position géographique de l'élément d'intérêt.

Une condition d'arrêt est ensuite évaluée. Tant que ladite condition d'arrêt n'est pas atteinte, on réitère depuis l'étape de calcul 323 du nombre de voisins pour les éléments restant dans l'ensemble 27 temporaire.

Si le nombre $N_{Vmax}$ calculé à l'étape 325 est

inférieur à $N_2$, alors la condition d'arrêt est directement évaluée.

La condition d'arrêt est par exemple atteinte si un nombre prédéfini de points d'intérêt ont été identifiés, ou bien si le nombre $N_{Vmax}$ est inférieur à un seuil prédéfini, ou bien s'il n'y a plus d'éléments dans l'ensemble 27 temporaire. Lorsque la condition d'arrêt est atteinte, l'étape d'identification 32 des points d'intérêt prend fin. Un ensemble 35 des points d'intérêt identifiés est alors disponible et mémorisé au sein du serveur 82.

La figure 10 est une illustration du deuxième mode particulier de mise en oeuvre de l'étape d'identification 32 de points d'intérêt décrit en référence à la figure 9.

La figure 10 représente une zone 50 géographique et des éléments 51 de référence identiques à ceux représentés dans la figure 8. Des cercles 530, 531, 532 en pointillé regroupent respectivement un élément d'intérêt 510, 511, 512 et ses éléments voisins. Dans l'exemple considéré, un premier élément 512 d'intérêt a été déterminé avec 5 éléments voisins. Un point d'intérêt 522 a alors été défini comme étant la moyenne des positions géographiques dudit élément d'intérêt 512 et de ses éléments voisins (situés dans le cercle 532). Puis, dans une deuxième itération, un deuxième élément 511 d'intérêt a été déterminé avec 4 éléments voisins. Un point d'intérêt 521 a alors été défini. Enfin, dans une troisième et dernière itération, un troisième point d'intérêt 520 a été défini à partir d'un élément 510 d'intérêt possédant également 4 éléments voisins. Il convient de noter que dans l'exemple considéré, si plusieurs éléments ont la même valeur Nvmax de voisins, le choix de l'un ou de l'autre comme élément d'intérêt est arbitraire.

Dans des modes particuliers de mise en oeuvre, l'étape d'identification 32 des points d'intérêt décrite en référence aux figures 7 et 9 peut en outre comporter une étape d'agrégation et/ou de filtrage des points d'intérêt identifiés. Par exemple, si deux points d'intérêt sont situés à une distance inférieure à un seuil prédéfini, alors ils sont agrégés en un unique point d'intérêt. Selon un autre exemple, si pour un point d'intérêt donné, le nombre d'éléments de l'ensemble 26 d'éléments de référence situés à une distance dudit point d'intérêt inférieure à une distance prédéfinie est inférieur à un seuil prédéfini, alors ledit point d'intérêt est supprimé.

Dans des modes particuliers de mise en oeuvre, au lieu de calculer un nombre entier d'éléments de référence (par exemple aux étapes 322 et 323), il est possible d'utiliser une valeur représentative d'un nombre d'éléments de référence calculée en fonction d'un facteur de pondération affecté à chaque élément de référence et représentatif d'une durée écoulée entre le moment d'utilisation des liens radio (dont les niveaux de RSSI mesurés servent à définir une signature radio) et le moment où les points d'intérêt sont identifiés. De telles dispositions permettent notamment de favoriser des points d'intérêt récents en accordant plus d'importance (c'est-à-dire en affectant une pondération plus forte) aux éléments de référence récents, c'est-à-dire aux éléments de référence correspondant à des messages émis récemment par des terminaux 72 de calibration. Par exemple, un facteur de pondération peut être défini pour un élément de référence en fonction du temps par :

$$w(t) = A \cdot \exp(-\frac{t}{2 \cdot \sigma^2})$$

fonction dans laquelle :

- $A$ et $\sigma$ sont des paramètres constants,
- $t$ est le temps écoulé depuis le moment où le message émis par un terminal 72 de calibration et utilisé pour définir l'élément de référence a été reçu,
- $exp()$ est la fonction mathématique exponentielle.

Avec une telle définition du facteur de pondération, plus le temps écoulé depuis la réception du message qui a servi à définir l'élément de référence est grand, et plus la valeur du facteur de pondération associé sera petite et donc plus l'importance accordée à l'élément de référence sera faible comparativement à d'autres éléments de référence pour lesquels le message associé a été reçu plus récemment. Il est ainsi possible d'accélérer la découverte de nouveaux points d'intérêt et d'ignorer des points d'intérêt désuets.

La figure 11 représente schématiquement les principales étapes d'un premier mode particulier de mise en oeuvre de l'étape de modification 34 de l'ensemble 26 d'éléments de référence à partir de l'ensemble 35 des points d'intérêt identifiés.

Dans une première étape, le serveur 82 procède, pour chaque élément de l'ensemble 26 d'éléments de référence, à un calcul 340 de la plus petite distance $D_{min}$ entre ledit élément de référence et un point d'intérêt de l'ensemble 35 des points d'intérêt identifiés.

Si cette distance $D_{min}$ est inférieure ou égale à un seuil $D_2$ prédéfini, alors le serveur 82 procède à une association 342 entre le point d'intérêt correspondant à la distance $D_{min}$ et l'élément de référence. Autrement dit, l'élément de référence est enrichi avec un identifiant ou label unique du point d'intérêt. L'élément de référence ainsi enrichi comporte alors une signature radio, une position géographique, ainsi qu'un label correspondant au point d'intérêt auquel il est associé.

Si par contre $D_{min} > D_2$, alors le serveur 82 procède à la suppression 344 de l'élément de référence.

Lorsque tous les éléments de référence ont été pris en compte, l'étape de modification 34 s'arrête et un ensemble 36 d'éléments de référence modifié est alors disponible. Cet ensemble 36 comporte uniquement les éléments de référence qui ont pu être associé à un point d'intérêt, c'est-à-dire les éléments de référence suffisamment proches d'un point d'intérêt. L'ensemble 36 contient pour chaque point d'intérêt un certain nombre de signatures radio associées.

La figure 12 représente schématiquement les principales étapes d'un deuxième mode particulier de mise en oeuvre de l'étape de modification 34 de l'ensemble 26 d'éléments de référence à partir de l'ensemble 35 des points d'intérêt identifiés.

Dans une première étape, le serveur 82 procède, pour chaque élément de référence de l'ensemble 26 d'éléments de référence, à un calcul 341, pour chaque point d'intérêt identifié, d'une valeur représentative de la distance qui sépare la position géographique de l'élément de référence de celle du point d'intérêt. Pour un élément de référence donné, il est possible de définir, par exemple selon une loi de distribution de Laplace, une fonction de « probabilité » associant une valeur comprise entre 0 et 1 à chaque point d'intérêt en fonction de la distance séparant le point d'intérêt et l'élément de référence, de telle sorte que plus l'élément de référence est proche d'un point d'intérêt et plus la valeur de probabilité est grande, et de telle sorte que la somme des valeurs de probabilité soit égale à 1.

Le serveur 82 procède alors à une association 343 des valeurs de probabilité ainsi calculées à l'élément de référence. Autrement dit, l'élément de référence est enrichi avec un ensemble de valeurs, chaque valeur représentant une probabilité d'être associé à un point d'intérêt. L'élément de référence ainsi enrichi comporte alors une signature radio, une position géographique, ainsi qu'une valeur de probabilité pour chaque point d'intérêt identifié.

Lorsque tous les éléments de référence ont été pris en compte, l'étape de modification 34 s'arrête et un ensemble 36 d'éléments de référence modifié est alors disponible. L'ensemble 36 comporte ainsi pour chaque signature radio d'un élément de référence une probabilité d'être associée à un point d'intérêt identifié.

Pendant la phase 40 de recherche, l'estimation 44 de la position géographique d'un terminal 70 d'intérêt est par exemple réalisée à l'aide d'un algorithme d'apprentissage automatique de classification conventionnel de type « arbre décisionnel ». Le fait d'avoir enrichi les éléments de référence présents dans l'ensemble 36 permet en effet de transformer un problème généralement abordé sous la forme d'une régression en un problème de classification. En effet, pendant la phase 30 d'affinement, à chaque point d'intérêt est attribué un label, et la signature radio associée à chaque élément de référence est « classée » selon sa probabilité d'appartenir à tel ou tel label. Pendant la phase 40 de recherche, à partir de la signature radio d'un terminal 70 d'intérêt, et à l'aide des éléments de référence présents dans l'ensemble 36 modifié, l'algorithme de classification est alors capable de fournir une probabilité pour ladite signature radio d'appartenir à tel ou tel label. La position géographique du terminal 70 d'intérêt est alors généralement estimée comme étant la position géographique du point d'intérêt correspondant au label ayant la plus grande valeur de probabilité. Si la plus grande valeur de probabilité est inférieure à un seuil prédéfini, il est aussi possible de conclure que le terminal 70 d'intérêt n'est pas localisé à un des points d'intérêt identifiés (auquel cas le terminal 70 d'intérêt est probablement en transit entre deux points d'intérêt).

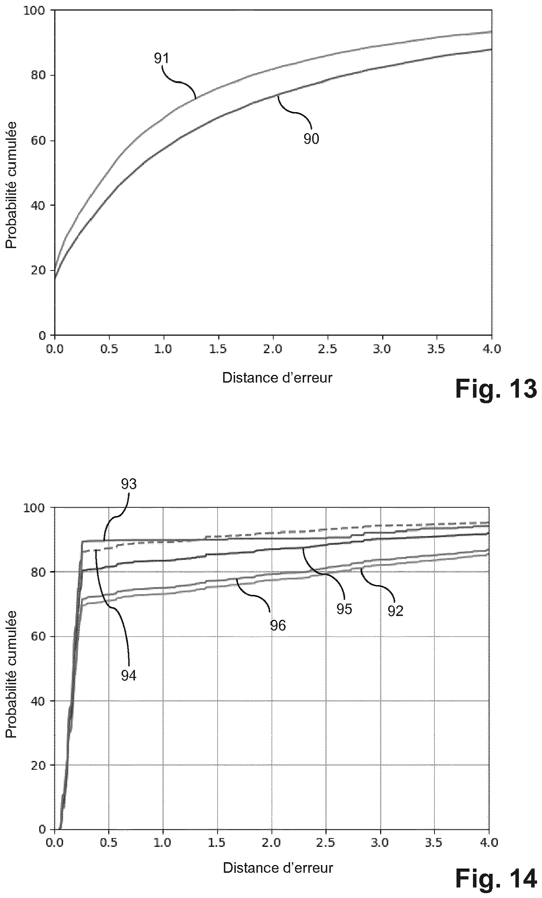

Plusieurs simulations montrent que le fait d'avoir enrichi et/ou nettoyé l'ensemble 26 des éléments de référence dans la phase 30 d'affinement apporte un gain de précision significatif à l'algorithme de classification. Les résultats de ces simulations sont illustrés dans les figures 13 et 14.

Pour réaliser ces simulations, un ensemble 26 d'éléments de référence est acquis pendant une phase 20 de calibration, et il est utilisé pour chacune des simulations. D'autre part, des éléments, dits « éléments de test », différents des éléments de référence, sont disponibles. Chaque élément de test comporte une signature radio et une position géographique connue. Pour chaque élément de test, une position géographique est estimée et une distance d'erreur correspondant à la distance entre la position géographique estimée et la position géographique connue est calculée. Une courbe 90 à 96 représentant une répartition de la distance d'erreur parmi tous les éléments de test, ou bien parmi un échantillon seulement des éléments de test, est alors tracée.

Dans ces simulations, 200.000 éléments de référence et 200.000 éléments de tests sont utilisés. La taille de la zone géographique considérée correspond environ à celle d'un pays grand comme la France.

Pour les simulations dont les résultats sont illustrés à la figure 13, un procédé de géolocalisation conventionnel basé sur un algorithme d'apprentissage automatique de régression est utilisé. Une position géographique est estimée par l'algorithme pour chaque élément de test à partir de la signature radio dudit élément de test et de l'ensemble 26 d'éléments de référence acquis pendant la phase 20 de calibration.

La courbe 90 représente la répartition de la distance d'erreur pour tous les éléments de test disponibles.

La courbe 91 représente quant à elle la répartition de la distance d'erreur pour un échantillon correspondant à des éléments de test suffisamment proches de points d'intérêt identifiés. Dans l'exemple considéré, des points d'intérêt sont identifiés à partir de l'ensemble 26 d'éléments de référence à l'aide du deuxième mode particulier de mise en oeuvre de l'étape d'identification 32 des points d'intérêt, tel que décrit en référence à la figure 9, et un élément de test est considéré suffisamment proche d'un point d'intérêt si la plus petite distance ($D_{min}$) entre la position géographique connue dudit élément de test et un point d'intérêt identifié est inférieure ou égale à un seuil ($D_2$). Pour ces simulations, la valeur de $D_2$ est fixée à 250 mètres.

Il apparaît ainsi sur la figure 13 que l'algorithme de régression est plus précis lorsqu'il estime la position géographique d'un terminal 70 d'intérêt situé à proximité d'un des points d'intérêt identifiés. Cela s'explique intuitivement par le fait que l'algorithme d'apprentissage a une meilleure connaissance de la relation existant entre une signature radio et une position géographique pour des éléments proches d'un point d'intérêt car dans l'ensemble 26 la densité géographique d'éléments de référence est plus forte à proximité des points d'intérêt. La précision de l'algorithme de régression est cependant décevante, par exemple la distance d'erreur est inférieure à 0,5 km seulement dans environ 50% des cas.

La figure 14 illustre les résultats obtenus avec un procédé 10 de géolocalisation selon l'invention. Un algorithme d'apprentissage automatique de classification est utilisé pour la phase 40 de recherche, et il utilise un ensemble 36 d'éléments de référence modifié par une phase 30 d'affinement. Dans l'exemple considéré, la phase 30 d'affinement comporte une étape d'identification 32 des points d'intérêt selon le mode particulier de mise en oeuvre décrit en référence à la figure 9 et une étape 34 de modification de l'ensemble 26 d'éléments de référence selon le mode particulier de mise en oeuvre décrit en référence à la figure 11. L'algorithme de classification fournit alors, pour un élément de test considéré, une valeur de probabilité pour ledit élément de test d'être associé à un point d'intérêt identifié. La position géographique estimée de l'élément de test est alors définie comme étant la position géographique du point d'intérêt pour lequel ladite valeur de probabilité est la plus grande. Pour ces simulations, la valeur de $D_1$ est également fixée à 250 mètres, et la valeur du seuil $N_2$ est fixée à 300.

La courbe 92 représente la répartition de la distance d'erreur pour tous les éléments de test disponibles. Dans ce cas, la distance d'erreur est inférieure à 0,5 km dans environ 70% des cas.

La courbe 93 représente la répartition de la distance d'erreur pour l'échantillon d'éléments de test utilisé pour la courbe 91 correspondant à des éléments de test considérés comme suffisamment proches de points d'intérêt identifiés (distance à un point d'intérêt inférieure ou égale au seuil $D_2$). Pour cet échantillon, la distance d'erreur est inférieure à 0,5 km dans environ 90% des cas.

La courbe 94 représente la répartition de la distance d'erreur pour un échantillon d'éléments de test pour lesquels la plus grande valeur de probabilité associée à un point d'intérêt est supérieure ou égale à 0,9. Pour cet échantillon, la distance d'erreur est inférieure à 0,5 km dans environ 87% des cas. Cet échantillon regroupe 56% des éléments de test. Dans ce cas, 32% des éléments de test considérés comme proche d'un point d'intérêt (distance inférieure ou égale au seuil $D_2$) ont été « faussement » écartés de l'échantillon.

La courbe 95 représente la répartition de la distance d'erreur pour un échantillon d'éléments de test pour lesquels la plus grande valeur de probabilité associée à un point d'intérêt est supérieure ou égale à 0,7. Pour cet échantillon, la distance d'erreur est inférieure à 0,5 km dans environ 82% des cas. Cet échantillon regroupe 76% des éléments de test. Dans ce cas, 15% des éléments de test considérés comme proche d'un point d'intérêt (distance à un point d'intérêt inférieure ou égale au seuil $D_2$) ont été « faussement » écartés de l'échantillon.

La courbe 96 représente la répartition de la distance d'erreur pour un échantillon d'éléments de test pour lesquels la plus grande valeur de probabilité associée à un point d'intérêt est supérieure ou égale à 0,4. Pour cet échantillon, la distance d'erreur est inférieure à 0,5 km dans environ 73% des cas. Cet échantillon regroupe 96% des éléments de test. Dans ce cas, 1,5% des éléments de test considérés comme proche d'un point d'intérêt (distance à un point d'intérêt inférieure ou égale au seuil $D_2$) ont été « faussement » écartés de l'échantillon.

Dans les différents cas représentés par les courbes 92 à 96, la distance d'erreur est inférieure à 0,2 km dans environ 50% des cas.

Il apparaît ainsi que le procédé 10 de géolocalisation selon l'invention dont les résultats sont illustrés par les courbes 92 à 96 de la figure 14 est nettement plus précis qu'un procédé 10 de géolocalisation conventionnel dont les résultats sont illustrés par les courbes 90 et 91 de la figure 13.

Les résultats illustrés à la figure 14 montrent qu'avec le procédé 10 de géolocalisation selon l'invention, il est possible d'estimer avec une bonne précision la position géographique d'un terminal 70 d'intérêt situé à proximité d'un point d'intérêt. Il est également possible de déterminer si le terminal 70 d'intérêt a une forte probabilité d'être en transit entre deux points d'intérêt (par exemple si la plus grande valeur de probabilité retournée est inférieure à un seuil prédéfini).

La valeur seuil de probabilité permet de déterminer si la position d'un terminal 70 d'intérêt peut être associée à la position d'un point d'intérêt, ou bien si au contraire il faut considérer que ledit terminal 70 d'intérêt est en transit entre des points d'intérêt. Cette valeur seuil de probabilité peut par exemple être déterminée en fonction d'une courbe reliant la qualité de la prédiction et la probabilité de confiance de cette prédiction (par exemple à partir du point d'inflexion ou indice de Youden d'une courbe ROC (acronyme anglais de « *Receiver Operating Characteristic* »). Selon un autre exemple, elle peut être choisie de manière arbitraire en fonction de contraintes liées au domaine d'application. Par exemple s'il convient d'avoir une très forte précision de géolocalisation d'un terminal 70 d'intérêt, au risque de ne pas pouvoir estimer la position d'un nombre important de terminaux 70 d'intérêt, il faut prendre une valeur seuil de probabilité grande, par exemple la valeur 0,9 comme pour l'exemple illustré avec la courbe 94. Si au contraire il s'agit d'être capable de géolocaliser une grande proportion de terminaux 70 d'intérêt, au risque de réduire la précision de géolocalisation, alors il faut prendre une valeur seuil de probabilité plus faible, par exemple la valeur 0,4 comme pour l'exemple illustré avec la courbe 95. Pour l'exemple considéré, à savoir un procédé de géolocalisation de palettes de marchandises sur une surface géographique importante correspondant par exemple à un pays ou un continent, une valeur seuil de probabilité de l'ordre de 0,7 semble être un bon compromis.

La description ci-avant illustre clairement que, par ses différentes caractéristiques et leurs avantages, la présente invention atteint les objectifs fixés et apportent en outre des avantages supplémentaires.

En particulier, le procédé 10 de géolocalisation selon l'invention améliore considérablement les performances en termes de précision par rapport à des procédés conventionnels de géolocalisation basés sur des méthodes d'apprentissage. Ce gain de précision est notamment dû à la phase 30 d'affinement qui permet de renforcer une relation entre une signature radio et une position géographique en tirant profit de l'existence de points d'intérêt auxquels la probabilité de présence d'un terminal 70, 72 est plus grande qu'ailleurs. La phase 30 d'affinement permet également de supprimer des éléments disparates qui ne correspondent pas à un point d'intérêt et qui contribuent à générer un « bruit » qui limite les performances de l'algorithme d'apprentissage.

En outre, la suppression d'éléments disparates contribue à diminuer le nombre d'éléments de référence utilisés par l'algorithme d'apprentissage, et ainsi à en réduire la complexité, ce qui se traduit en un gain en termes de capacité et de temps de calcul.

De plus, la suppression d'éléments disparates peut contribuer à réduire la taille de la signature radio (c'est-à-dire le nombre de mesures RSSI d'une signature radio) en ne considérant que les stations de base qui sont localisées à proximité des points d'intérêt, ce qui contribue encore davantage à réduire la complexité de l'algorithme d'apprentissage.

Le fait de connaître la liste des points d'intérêt pour les terminaux 70, 72 du système 60 peut également être intéressant en soi, par exemple pour connaître la liste des entrepôts utilisés dans le transport de marchandises. Un autre avantage repose sur la possibilité d'attribuer un facteur de pondération à chaque élément de référence en fonction du temps écoulé depuis le moment où un message a été émis par un terminal 72 de calibration pour enrichir l'ensemble 26 d'éléments de référence. Cela permet en effet d'accélérer la découverte de nouveaux points d'intérêt et de favoriser l'oubli de points d'intérêt désuets.

Aussi, la mise en place d'un tel procédé 10 de géolocalisation au sein d'un système 60 de communication sans fil comme celui qui a été décrit à titre d'exemple est particulièrement peu onéreuse. En effet, elle ne nécessite pas de matériel spécifique additionnel au niveau de la majorité des terminaux 70 ou des stations de base 81, et grâce à l'existence de certains terminaux spéciaux 72 équipés d'un système de positionnement dans le système 60 elle permet d'automatiser entièrement la phase 20 de calibration.

De manière générale, il est à noter que les modes de mise en oeuvre et de réalisation considérés ci-dessus ont été décrits à titre d'exemples non limitatifs, et que d'autres variantes sont par conséquent envisageables.

Notamment, les modes de mise en oeuvre de l'étape d'identification 32 des points d'intérêt et de modification 34 de l'ensemble 26 d'éléments de référence ont été donnés à titre d'exemple, et d'autres méthodes pourraient être envisagées comme des variantes de l'invention.

L'invention a été décrite pour un système 60 de communication radio sans fil à bande ultra étroite adapté à des applications du type IoT, mais rien n'empêche de mettre en oeuvre le procédé 10 de géolocalisation selon l'invention pour d'autres types de système de communication comme par exemple des réseaux cellulaires GSM, UMTS, LTE, Wi-Fi, etc.

Les mesures représentatives du niveau de qualité de lien radio utilisées pour former une signature radio peuvent être effectuées par des stations de base, sur un lien radio montant, mais aussi par des terminaux, sur un lien radio descendant. Les mesures sont par exemple transmises à un serveur qui réalise alors les autres étapes du procédé de géolocalisation. Selon d'autres exemples, les mesures représentatives du niveau de qualité de lien radio pourraient être effectuées par le serveur lui-même, à partir d'informations reçues des terminaux et/ou des stations de base.

Comme indiqué précédemment, la valeur représentative de la qualité de lien radio peut être différente du niveau de RSSI. Cela peut être par exemple, un niveau d'atténuation du signal, un rapport signal sur bruit, ou bien un autre indicateur de qualité de canal radio.

Dans l'exemple considéré, un élément de référence correspond à la position géographique obtenue par le récepteur GPS d'un terminal 72 de calibration associée à la signature radio dudit terminal 72 de calibration à ladite position géographique. Dans des modes particuliers de réalisation, l'ensemble 26 d'éléments de référence peut en outre être continuellement enrichi avec des éléments de référence correspondant chacun à une position géographique d'un terminal 70 d'intérêt estimée pendant la phase de recherche et associée à la signature radio dudit terminal 70 d'intérêt situé à cette position.

D'autres méthodes peuvent néanmoins être envisagées pour définir l'ensemble 26 d'éléments de référence. Par exemple, la position géographique d'un terminal (72) de calibration peut être estimée pendant la phase de calibration par une méthode conventionnelle de géolocalisation basée sur un algorithme d'apprentissage automatique par régression. Selon encore un autre exemple, la position géographique d'un terminal (72) de calibration peut être estimée pendant la phase de calibration à l'aide d'une autre méthode de géolocalisation, par exemple une méthode de type TDOA (acronyme anglais de « Time Différence Of Arrival ») basée sur des mesures de temps de propagation d'un signal échangé entre un terminal et différentes stations de base.

Pour la phase de recherche, différents algorithmes d'apprentissage automatique de classification peuvent être utilisés pour estimer la position géographique d'un terminal 70 d'intérêt à partir de sa signature radio et de l'ensemble 36 d'éléments de référence modifié. Le fait d'utiliser l'un ou l'autre de ces algorithmes ne constitue qu'une variante de mise en oeuvre de l'invention.

L'invention a été décrite en considérant le domaine du transport de marchandises. Rien n'exclut cependant de considérer d'autres domaines d'application pour le procédé 10 de géolocalisation selon l'invention, en particulier des domaines pour lesquels les terminaux à géolocaliser sont susceptibles d'occuper préférentiellement des positions géographiques particulières ou de passer par des positions géographiques particulières auxquelles un grand nombre de terminaux 70 du système 60 ont tendance à passer (géolocalisation de bagages dans des aéroports, géolocalisation de colis, etc.).

Dans l'exemple décrit, les points d'intérêt sont identifiés dynamiquement à partir des éléments de référence fournis par des terminaux 72 de calibration. Rien n'empêche cependant que dans des modes particuliers de mise en oeuvre, tout ou partie des points d'intérêts soient connus a priori et que des signatures radio associées à ces points d'intérêt soient déterminées à l'aide de dispositifs 71 de calibration pouvant être déplacés intentionnellement sur lesdits points d'intérêt connus a priori.

## Revendications

1. Procédé (10) de géolocalisation d'un terminal, dit « terminal (70) d'intérêt », d'un système (60) de communication sans fil, comportant :

    - une détermination, à partir de messages émis par d'autres terminaux, dits « terminaux (72) de calibration », et reçus par des stations de base (81) dudit système (60) de communication sans fil, d'un ensemble (26) d'éléments de référence, chaque élément de référence comportant une signature radio associée à une position géographique d'un terminal de calibration lors de l'émission d'un message, ladite signature radio correspondant à un ensemble de valeurs représentatives de la qualité de liens radio existant entre ledit terminal (72) de calibration et des stations de base (81), et
    - une détermination (42), à partir d'un message émis par ledit terminal (70) d'intérêt situé à une position géographique à estimer, d'une signature radio pour ledit terminal (70) d'intérêt,

    ledit procédé (10) de géolocalisation étant **caractérisé en ce qu'**il comporte en outre :

    - une identification (32) de positions géographiques particulières, dites « points d'intérêt », à partir des positions géographiques des éléments de référence de l'ensemble (26) d'éléments de référence,

    - une modification (34) de l'ensemble (26) d'éléments de référence à partir des points d'intérêt identifiés, et
    - une estimation (44) de la position géographique dudit terminal d'intérêt à partir de la signature radio dudit terminal (70) d'intérêt et de l'ensemble (36) d'éléments de référence modifié.

2. Procédé (10) de géolocalisation selon la revendication 1 dans lequel la position géographique du terminal (70) d'intérêt est estimée sous la forme d'une valeur représentative d'une probabilité pour ledit terminal (70) d'intérêt d'être situé en un point d'intérêt identifié.

3. Procédé (10) de géolocalisation selon l'une des revendications 1 à 2 dans lequel l'identification (32) des points d'intérêt comporte :

    - un découpage (320) d'une zone (50) géographique à couvrir en plusieurs cellules de tailles prédéfinies,
    - un calcul (322) pour chaque cellule d'une valeur représentative d'un nombre d'éléments de référence situés dans ladite cellule,
    - si la valeur calculée satisfait un critère prédéfini, une définition (324) d'un point d'intérêt en fonction de ladite cellule et/ou des positions géographiques des éléments de référence situés dans ladite cellule.

4. Procédé (10) de géolocalisation selon l'une des revendications 1 à 2 dans lequel l'identification (32) des points d'intérêt comporte une étape de calcul (321), pour chaque élément de référence, de distances séparant ledit élément de référence et chaque autre élément de référence, ainsi que les étapes suivantes effectuées itérativement sur un ensemble (27) d'éléments de référence temporaire correspondant initialement à l'ensemble (26) d'éléments de référence, jusqu'à ce qu'une condition d'arrêt soit atteinte :

    - un calcul (323) pour chaque élément de référence de l'ensemble (27) d'éléments de référence temporaire, d'une valeur représentative d'un nombre d'éléments de référence situés à une distance inférieure à un seuil prédéfini, dits « éléments voisins »,
    - si la plus grande valeur calculée, pour un élément dit « élément d'intérêt », est supérieure à un seuil prédéfini :

        o une définition (327) d'un point d'intérêt en fonction des positions géographiques de l'élément d'intérêt et/ou de ses éléments voisins,
        o une suppression (329) de l'élément d'intérêt et de ses éléments voisins de l'ensemble (27) d'éléments de référence temporaire.

5. Procédé (10) de géolocalisation selon l'une des revendications 1 à 4 comportant en outre une étape de filtrage des points d'intérêt identifiés en fonction de leurs positions géographiques et/ou d'une valeur représentative d'un nombre d'éléments de référence de l'ensemble (26) d'éléments de référence situés à une distance inférieure à un seuil prédéfini.

6. Procédé (10) de géolocalisation selon l'une des revendications 3 à 5 dans lequel la valeur représentative d'un nombre d'éléments de référence est calculée en fonction d'un facteur de pondération affecté à chaque élément de référence et représentatif d'une durée écoulée entre le moment d'émission du message par le terminal (72) de calibration et le moment où les points d'intérêt sont identifiés.

7. Procédé (10) de géolocalisation selon l'une des revendications 1 à 6 dans lequel la modification (34) de l'ensemble (26) d'éléments de référence comporte les étapes suivantes pour chaque élément de référence de l'ensemble (26) d'éléments de référence :

   - un calcul (340) de la plus petite distance séparant ledit élément de référence et un des points d'intérêt identifiés,
   - si la plus petite distance calculée est inférieure à un seuil prédéfini :

      o une association (342) audit élément de référence du point d'intérêt correspondant,

   - sinon :

      o une suppression (344) dudit élément de référence de l'ensemble (26) d'éléments de référence.

8. Procédé (10) de géolocalisation selon l'une des revendications 1 à 6 dans lequel la modification (34) de l'ensemble (26) d'éléments de référence comporte les étapes suivantes pour chaque élément de référence de l'ensemble (26) d'éléments de référence :

   - un calcul (341), pour chaque point d'intérêt identifié, d'une valeur représentative de la distance qui sépare ledit élément de référence dudit point d'intérêt,
   - une association (343) audit élément de référence des valeurs ainsi calculées.

9. Procédé (10) de géolocalisation selon l'une des revendications 1 à 8 dans lequel un lien radio est un lien montant vers une station de base (81) du système (60) de communication sans fil.

10. Procédé (10) de géolocalisation selon la revendication 9 dans lequel une détermination (22, 42) de la signature radio d'un terminal (70, 72) comporte

    - une émission (220, 420) par le terminal (70, 72) d'un message à destination des stations de base (81),
    - une mesure (221, 421), pour chaque station de base (81), d'une valeur représentative de la qualité du lien radio existant entre ledit terminal (70, 72) et la station de base (81) considérée à partir du message reçu dudit terminal (70, 72),
    - une formation (222, 422), par un serveur (82) relié aux stations de base (81) de la signature radio du terminal (70, 72) à partir des valeurs mesurées.

11. Procédé (10) de géolocalisation selon la revendication 10 dans lequel un terminal (72) de calibration est équipé d'un système de positionnement et la détermination (22) de la signature radio dudit terminal (72) de calibration comporte en outre :

    - une inclusion, dans le message émis par ledit terminal (72) de calibration, de la position géographique courante dudit terminal (72) de calibration mesurée par le système de positionnement,
    - une extraction (223), par le serveur (82), de la position géographique contenue dans ledit message.

12. Procédé (10) de géolocalisation selon l'une des revendications 1 à 11 dans lequel la valeur représentative de la qualité du lien radio existant entre un terminal (70, 72) et une station de base (81) est un niveau de puissance reçue d'un signal radio échangé entre ladite station de base (81) et ledit terminal (70, 72).

13. Procédé (10) de géolocalisation selon l'une des revendications 1 à 12 dans lequel le lien radio est un canal de communication à bande ultra étroite.

14. Procédé (10) de géolocalisation selon l'une des revendications 1 à 13 dans lequel l'estimation (44) de la position géographique d'un terminal (70) d'intérêt à partir de la signature radio dudit terminal (70) d'intérêt et de l'ensemble (36) d'éléments de référence modifié est réalisée à l'aide d'un algorithme d'apprentissage automatique de classification basé sur une technique d'arbres décisionnels.

15. Système (60) de communication sans fil comportant des terminaux (70, 72) et un réseau d'accès (80) comportant des stations de base (81) et un serveur (82) relié auxdites stations de base (81), ledit système (60) comportant en outre une base de données mémorisant un ensemble (26) d'éléments de référence formés à partir de messages émis par des terminaux, dits « terminaux (72) de calibration », et reçus par des stations de base (81), chaque élément de référence comportant une signature radio associée à une position géographique d'un terminal de calibration lors de l'émission d'un message, ladite signature radio comprenant des valeurs représentatives de la qualité de liens radio existant entre ledit terminal (72) de calibration et des stations de base (81), le réseau d'accès (80) étant configuré pour :

- mesurer des valeurs représentatives de la qualité de liens radio existant entre des stations de base (81) et un terminal (70) dont la position géographique doit être estimée, dit « terminal (70) d'intérêt », et
- former une signature radio correspondant à l'ensemble des valeurs mesurées pour ledit terminal (70) d'intérêt,

**caractérisé en ce que** le réseau d'accès (80) est en outre configuré pour :

- identifier des positions géographiques particulières, dites « points d'intérêt », à partir des positions géographiques des éléments de référence de l'ensemble (26) d'éléments de référence,
- modifier l'ensemble (26) d'éléments de référence à partir des points d'intérêt identifiés, et
- estimer la position géographique du terminal (70) d'intérêt à partir de la signature radio du terminal (70) d'intérêt et de l'ensemble (36) d'éléments de référence modifié.

**Patentansprüche**

1. Verfahren (10) zur Geolokalisierung eines Terminals, "Terminal (70) von Interesse" genannt, eines drahtlosen Kommunikationssystems (60), beinhaltend:

- eine Bestimmung, ausgehend von Nachrichten, die von anderen Terminals, "Kalibrierterminals (72)" genannt, emittiert werden, die von Basisstationen (81) des drahtlosen Kommunikationssystems (60) empfangen werden, einer Referenzeinheit (26), wobei jedes Referenzelement eine Funksignatur beinhaltend, die einer geografischen Position eines Kalibrierterminals bei der Emission einer Nachricht zugeordnet ist, wobei die Funksignatur einer Einheit von Werten entspricht, die für die Qualität von Funkverbindungen, die zwischen dem Kalibrierterminal (72) und Basisstationen (81) existieren, repräsentativ sind, und
- eine Bestimmung (42), ausgehend von einer Nachricht, die vom Terminal (70) von Interesse emittiert wurde, das sich an einer zu schätzenden geografischen Position befindet, einer Funksignatur durch das Terminal (70) von Interesse, wobei das Geolokalisierungsverfahren (10) **dadurch gekennzeichnet ist, dass** es ferner beinhaltet:
- eine Identifizierung (32) bestimmter geografischer Positionen, "Punkte von Interesse" genannt, ausgehend von den geografischen Positionen der Referenzelemente der Referenzeinheit (26),
- eine Modifikation (34) der Einheit (26) von Referenzelementen ausgehend von den identifizierten Punkten von Interesse, und
- eine Schätzung (44) der geografischen Position des Terminals von Interesse ausgehend von der Funksignatur des Terminals (70) von Interesse und der modifizierten Einheit (36) von Referenzelementen.

2. Geolokalisierungsverfahren (10) nach Anspruch 1, wobei die geografische Position des Terminals (70) von Interesse als Wert geschätzt wird, der für eine Wahrscheinlichkeit repräsentativ ist, dass sich das Terminal (70) von Interesse an einem identifizierten Punkt von Interesse befindet.

3. Geolokalisierungsverfahren (10) nach einem der Ansprüche 1 bis 2, wobei die Identifizierung (32) der Punkte von Interesse beinhaltet:

- eine Aufteilung (320) eines abzudeckenden geografischen Bereichs (50) in mehrere Zellen vordefinierter Größe,
- eine Berechnung (322) für jede Zelle mit einem Wert, der für eine Anzahl von Referenzelementen repräsentativ ist, die sich in der Zelle befinden,
- wenn der berechnete Wert ein vordefiniertes Kriterium erfüllt, eine Definition (324) eines Punktes von Interesse in Abhängigkeit von der Zelle und/oder den geografischen Positionen der Referenzelemente, die sich in der Zelle befinden.

4. Geolokalisierungsverfahren (10) nach einem der Ansprüche 1 bis 2, wobei die Identifizierung (32) der Punkte von Interesse einen Schritt zur Berechnung (321), für jedes Referenzelement, der Abstände beinhaltet, die das Referenzelement und jedes andere Referenzelement beabstanden, sowie die folgenden Schritte, die iterativ an einer Einheit (27) temporärer Referenzelemente durchgeführt werden, die anfänglich der Einheit (26) von Referenzelementen entsprechen, bis eine Anhaltebedingung erreicht wird:

- eine Berechnung (323) für jedes Referenzelement der Einheit (27) temporärer Referenzelemente mit einem Wert, der für eine Anzahl von Referenzelementen repräsentativ ist, die sich in einem Abstand unterhalb eines vordefinierten Schwellenwerts befinden, "benachbarte Elemente" genannt,
- wenn der größte berechnete Wert für ein Element, "Element von Interesse" genannt, größer ist als ein vordefinierter Schwellenwert:

  o eine Definition (327) eines Punktes von Interesse in Abhängigkeit von den geografischen Positionen des Elements von Interesse und/oder seiner benachbarten Elemente,
  o ein Entfernen (329) des Elements von Interesse und seiner benachbarten Elemente aus der Einheit (27) temporärer Referenzelemente.

**5.** Geolokalisierungsverfahren (10) nach einem der Ansprüche 1 bis 4, das ferner einen Schritt zum Filtern identifizierter Punkte von Interesse in Abhängigkeit von ihren geografischen Positionen beinhaltet und/oder von einem Wert, der für eine Anzahl von Referenzelementen der Einheit (26) von Referenzelementen, die sich in einem Abstand unterhalb eines vordefinierten Schwellenwerts befinden, repräsentativ ist.

**6.** Geolokalisierungsverfahren (10) nach einem der Ansprüche 3 bis 5, wobei der Wert, der für eine Anzahl von Referenzelementen repräsentativ ist, in Abhängigkeit von einem Gewichtungsfaktor, der jedem Referenzelement zugewiesenen wird, berechnet wird, und repräsentativ ist für eine Zeitspanne, die zwischen dem Zeitpunkt der Emission der Nachricht durch das Kalibrierterminal (72) und dem Zeitpunkt der Identifizierung der Punkte von Interesse verstrichen ist.

**7.** Geolokalisierungsverfahren (10) nach einem der Ansprüche 1 bis 6, wobei die Modifikation (34) der Einheit (26) von Referenzelementen die folgenden Schritte für jedes Referenzelement der Einheit (26) von Referenzelementen beinhaltet:

- eine Berechnung (340) des kleinsten Abstands, der das Referenzelement und einen der identifizierten Punkte von Interesse beabstandet,
- wenn der kleinste berechnete Abstand kleiner ist als ein vordefinierter Schwellenwert:

  o eine Zuordnung (342) zum Referenzelement des entsprechenden Punktes von Interesse,

- andernfalls:

  o ein Entfernen (344) des Referenzelements aus der Einheit (26) von Referenzelementen.

**8.** Geolokalisierungsverfahren (10) nach einem der Ansprüche 1 bis 6, wobei die Modifikation (34) der Einheit (26) von Referenzelementen die folgenden Schritte für jedes Referenzelement der Referenzeinheit (26) beinhaltet:

- eine Berechnung (341), für jeden identifizierten Punkt von Interesse, eines Wertes, der für den Abstand repräsentativ ist, der das Referenzelement vom Punkt von Interesse beabstandet,
- eine Zuordnung (343) zum Referenzelement der so berechneten Werte.

**9.** Geolokalisierungsverfahren (10) nach einem der Ansprüche 1 bis 8, wobei eine Funkverbindung eine Uplink-Verbindung zu einer Basisstation (81) des drahtlosen Kommunikationssystems (60) ist.

**10.** Geolokalisierungsverfahren (10) nach Anspruch 9, wobei eine Bestimmung (22, 42) der Funksignatur eines Terminals (70, 72) beinhaltet:

- eine Emission (220, 420) durch das Terminal (70, 72) einer Nachricht an die Basisstationen (81),
- eine Messung (221, 421) für jede Basisstation (81) eines Wertes, der für die Qualität der Funkverbindung repräsentativ ist, die zwischen dem Terminal (70, 72) und der betrachteten Basisstation (81) existiert, ausgehend von der Nachricht, die vom Terminal (70, 72) empfangen wurde,
- eine Bildung (222, 422), durch einen Server (82), der mit den Basisstationen (81) verbunden ist, der Funksignatur des Terminals (70, 72), ausgehend von den gemessenen Werten.

**11.** Geolokalisierungsverfahren (10) nach Anspruch 10, wobei ein Kalibrierterminal (72) mit einem Positionierungssystem ausgestattet ist, und die Bestimmung (22) der Funksignatur des Kalibrierterminals (72) ferner beinhaltet:

- eine Einbeziehung, in die Nachricht, die durch das Kalibrierterminal (72) emittiert wurde, der aktuellen geografischen Position des Kalibrierterminals (72), die vom Positionierungssystem gemessen wurde,

- eine Extraktion (223), durch den Server (82), der geografischen Position, die in der Nachricht enthalten ist.

12. Geolokalisierungsverfahren (10) nach einem der Ansprüche 1 bis 11, wobei der Wert, der für die Qualität der Funkverbindung repräsentativ ist, die zwischen einem Terminal (70, 72) und einer Basisstation (81) existiert, ein Leistungspegel ist, der von einem Funksignal empfangen wird, das zwischen der Basisstation (81) und dem Terminal (70, 72) ausgetauscht wird.

13. Geolokalisierungsverfahren (10) nach einem der Ansprüche 1 bis 12, wobei die Funkverbindung ein Ultra-Schmalband-Kommunikationskanal ist.

14. Geolokalisierungsverfahren (10) nach einem der Ansprüche 1 bis 13, wobei die Schätzung (44) der geografischen Position eines Terminals (70) von Interesse ausgehend von der Funksignatur des Terminals (70) von Interesse und der modifizierten Einheit (36) von Referenzelementen unter Verwendung eines Klassifizierungsalgorithmus für maschinelles Lernen, der auf der Technik der Entscheidungsbäume basiert, realisiert wird.

15. Drahtloses Kommunikationssystem (60), Terminals (70, 72) beinhaltend und ein Zugangsnetz (80), das Basisstationen (81) beinhaltet und einen Server (82), der mit den Basisstationen (81) verbunden ist, wobei das System (60) ferner eine Datenbank beinhaltet, in der eine Einheit (26) von Referenzelementen gespeichert ist, die ausgehend von Nachrichten gebildet werden, die von Terminals, "Kalibrierterminals (72)" genannt, emittiert werden, und von Basisstationen (81) empfangen werden, wobei jedes Referenzelement eine Funksignatur beinhaltet, die einer geografischen Position eines Kalibrierterminals während der Emission einer Nachricht zugeordnet wird, wobei die Funksignatur Werte umfasst, die für die Qualität von Funkverbindungen, die zwischen dem Kalibrierterminal (72) und den Basisstationen (81) existieren, repräsentativ sind, wobei das Zugangsnetz (80) konfiguriert ist zum:

- Messen von Werten, die repräsentativ sind für die Qualität von Funkverbindungen, die zwischen Basisstationen (81) und einem Terminal (70) existieren, dessen geografische Position geschätzt werden muss, "Terminal (70) von Interesse" genannt, und
- Bilden einer Funksignatur, die der Einheit von gemessenen Werten für das Terminal (70) von Interesse entspricht, **dadurch gekennzeichnet, dass** das Zugangsnetz (80) ferner konfiguriert ist zum:
- Identifizieren von bestimmten geografischen Positionen, "Punkte von Interesse" genannt, ausgehend von den geografischen Positionen der Referenzelemente der Einheit (26) von Referenzelementen,
- Modifizieren der Einheit (26) von Referenzelementen ausgehend von den identifizierten Punkten von Interesse, und
- Schätzen der geografischen Position des Terminals (70) von Interesse ausgehend von der Funksignatur des Terminals (70) von Interesse und der modifizierten Einheit (36) von Referenzelementen.

**Claims**

1. Method (10) for geolocating a terminal, called "terminal (70) of interest", of a wireless communication system (60), including:

   - a determination, on the basis of messages emitted by other terminals, called "calibration terminals (72)", and received by base stations (81) of said wireless communication system (60), of a set (26) of reference elements, each reference element including a radio signature associated with a geographic position of a calibration terminal when a message is emitted, said radio signature corresponding to a set of values representative of the quality of radio links existing between said calibration terminal (72) and base stations (81), and
   - a determination (42), on the basis of a message emitted by said terminal (70) of interest located at a geographic position to be estimated, of a radio signature for said terminal (70) of interest,

   said geolocation method (10) being **characterized in that** it further includes:

   - an identification (32) of particular geographic positions, called "points of interest", on the basis of the geographic positions of the reference elements of the set (26) of reference elements,
   - a modification (34) of the set (26) of reference elements on the basis of the points of interest identified, and
   - an estimation (44) of the geographic position of said terminal of interest on the basis of the radio signature of said terminal (70) of interest and the modified set (36) of reference elements.

2. Geolocation method (10) according to claim 1 wherein the geographic position of the terminal (70) of interest is estimated in the form of a value representative of a probability for said terminal (70) of interest of being located at an identified point of interest.

**3.** Geolocation method (10) according to one of claims 1 to 2 wherein the identification (32) of the points of interest includes:

- a division (320) of a geographic zone (50) to be covered into a plurality of cells having a predefined size,
- a calculation (322) for each cell of a value representative of a number of reference elements located in said cell,
- if the value calculated satisfies a predefined criterion, a definition (324) of a point of interest according to said cell and/or the geographic positions of the reference elements located in said cell.

**4.** Geolocation method (10) according to one of claims 1 to 2 wherein the identification (32) of the points of interest includes a step (321) of calculating, for each reference element, distances separating said reference element and each other reference element, as well as the following steps carried out iteratively on a temporary set (27) of reference elements initially corresponding to the set (26) of reference elements, until a stoppage condition is reached:

- a calculation (323), for each reference element of the temporary set (27) of reference elements, of a value representative of a number of reference elements located at a distance lower than a predefined threshold, called "neighboring elements",
- if the greatest value calculated, for an element called "element of interest", is greater than a predefined threshold:

-- a definition (327) of a point of interest according to the geographic positions of the element of interest and/or of its neighboring elements,
-- an elimination (329) of the element of interest and of its neighboring elements from the temporary set (27) of reference elements.

**5.** Geolocation method (10) according to one of claims 1 to 4 further including a step of filtering the points of interest identified according to their geographic positions and/or a value representative of a number of reference elements of the set (26) of reference elements located at a distance lower than a predefined threshold.

**6.** Geolocation method (10) according to one of claims 3 to 5 wherein the value representative of a number of reference elements is calculated according to a weighting factor assigned to each reference element and representative of a time that passed between the moment of emission of the message by the calibration terminal (72) and the moment at which the points of interest are identified.

**7.** Geolocation method (10) according to one of claims 1 to 6 wherein the modification (34) of the set (26) of reference elements includes the following steps for each reference element of the set (26) of reference elements:

- a calculation (340) of the smallest distance separating said reference element and one of the points of interest identified,
- if the smallest distance calculated is less than a predefined threshold:

-- an association (342) of the corresponding point of interest with said reference element,

- otherwise:

-- an elimination (344) of said reference element from the set (26) of reference elements.

**8.** Geolocation method (10) according to one of claims 1 to 6 wherein the modification (34) of the set (26) of reference elements includes the following steps for each reference element of the set (26) of reference elements:

- a calculation (341), for each point of interest identified, of a value representative of the distance that separates said reference element from said point of interest,
- an association (343) of the values thus calculated with said reference element.

**9.** Geolocation method (10) according to one of claims 1 to 8 wherein a radio link is an upstream link to a base station (81) of the wireless communication system (60).

**10.** Geolocation method (10) according to claim 9, wherein a determination (22, 42) of the radio signature of a terminal (70, 72) includes:

- an emission (220, 420) by the terminal (70, 72) of a message to the base stations (81),
- a measurement (221, 421), for each base station (81), of a value representative of the quality of the radio link existing between said terminal (70, 72) and the base station (81) in question on the basis of the message received from said terminal (70, 72),
- a formation (222, 422), by a server (82) connected to the base stations (81), of the radio signature of the terminal (70, 72) on the basis of the measured values.

11. Geolocation method (10) according to claim 10, wherein a calibration terminal (72) is equipped with a positioning system and the determination (22) of the radio signature of said calibration terminal (72) further includes:

- an inclusion, in the message emitted by said calibration terminal (72), of the current geographic position of said calibration terminal (72) measured by the positioning system,
- an extraction (223), by the server (82), of the geographic position contained in said message.

12. Geolocation method (10) according to one of claims 1 to 11, wherein the value representative of the quality of the radio link existing between a terminal (70, 72) and a base station (81) is a level of received power of a radio signal exchanged between said base station (81) and said terminal (70, 72).

13. Geolocation method (10) according to one of claims 1 to 12, wherein the radio link is an ultra-narrowband communication channel.

14. Geolocation method (10) according to one of claims 1 to 13, wherein the estimation (44) of the geographic position of a terminal (70) of interest on the basis of the radio signature of said terminal (70) of interest and the modified set (36) of reference elements is carried out using a classification machine learning algorithm based on a technique of decision trees.

15. Wireless communication system (60) including terminals (70, 72) and an access network (80) including base stations (81) and a server (82) connected to said base stations (81), said system (60) further including a database memorizing a set (26) of reference elements formed on the basis of messages emitted by terminals, called "calibration terminals (72)", and received by base stations (81), each reference element including a radio signature associated with a geographic position of a calibration terminal when a message is emitted, said radio signature comprising values representative of the quality of radio links existing between said calibration terminal (72) and base stations (81), the access network (80) being configured to:

- measure values representative of the quality of radio links existing between base stations (81) and a terminal (70), the geographic position of which must be estimated, called "terminal (70) of interest", and
- form a radio signature corresponding to all of the values measured for said terminal (70) of interest, **characterized in that** the access network (80) is further configured to:

- identify particular geographic positions, called "points of interest", on the basis of the geographic positions of the reference elements of the set (26) of reference elements,
- modify the set (26) of reference elements on the basis of the points of interest identified,
- estimate the geographic position of the terminal (70) of interest on the basis of the radio signature of the terminal (70) of interest and the modified set (36) of reference elements.

**Fig. 1**

Phase de calibration

Phase de recherche

Détermination d'une signature radio — 22

Stockage de l'élément de référence (position + signature) — 24

R — 26

Détermination d'une signature radio — 42

Estimation de la position — 44

Position estimée

**Fig. 2**

Phase de calibration

72

Détermination d'une
signature radio — 22

Stockage de l'élément
de référence
(position + signature) — 24

26 — R

Identification de points
d'intérêt — 32

Modification des
éléments de référence — 34

36 — R⁺

Phase d'affinement

— 20

— 30

— 10

Phase de recherche

70

?

Détermination d'une
signature radio — 42

Estimation de la
position — 44

Position estimée

— 40

## Fig. 3

60

70

70

72

81

80

82

81

81

## Fig. 4

Fig. 5

Fig. 6

26 — R

Découpage en cellules — 320

Calcul du nombre $N_C$ d'éléments dans chaque cellule — 322

non

35 — PI

oui ← Arrêt ? ← non ← ( $N_C \geq N_1$ ) ? — 32

oui

Définition d'un point d'intérêt — 324

**Fig. 7**

A    B    C    D

50

51

52

**Fig. 8**

27 — R_T

Calcul des distances entre les éléments — 321

Calcul du nombre $N_V$ de voisins (distance $\leq D_1$) pour chaque élément de $R_T$ — 323

Détermination de $N_{Vmax}$ — 325

— 32

non

35 — PI    oui ←— Arrêt ?    non —← ( $N_{Vmax} \geq N_2$ ) ?

oui

Définition d'un point d'intérêt — 327

Suppression de l'élément et de ses voisins dans $R_T$ — 329

**Fig. 9**

512    532
       522
                    50
531
511    521    520
510
530

**Fig. 10**

34

26 R    PI 35

Calcul de la plus petite
distance $D_{min}$ entre un
élément et un point d'intérêt — 340

non

344

Arrêt ?    oui    R⁺ — 36

non

Suppression
de l'élément    non    ( $D_{min} \leq D_2$ ) ?

oui

Association du point d'intérêt à
l'élément — 342

## Fig. 11

34

26 R    PI 35

Calcul d'une probabilité pour
un élément d'être associé à
un point d'intérêt — 341

Arrêt ?    oui    R⁺ — 36

Association des valeurs de
probabilité à l'élément — 343

## Fig. 12

Fig. 13

Fig. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2755431 A2

- WO 2012080787 A1